# EUROPÄISCHE PATENTSCHRIFT

(11) **EP 0 762 625 B1**
(45) Veröffentlichungstag und Bekanntmachung des Hinweises auf die Patenterteilung: **13.09.2000**
(21) Anmeldenummer: 96202424.6
(22) Anmeldetag: 02.09.1996
(51) Int. Cl.: H02P 6/06, H02P 6/08

(54) **Elektrischer Antrieb**
Electric drive
Entraînement électrique

(30) Priorität: 08.09.1995 DE 19533161
(43) Veröffentlichungstag der Anmeldung: 12.03.1997
(73) Patentinhaber: Philips Corporate Intellectual Property GmbH, 52064 Aachen (DE); Koninklijke Philips Electronics N.V., 5621 BA Eindhoven (NL)
(72) Erfinder: Bolte, Ekkehard, Dr., c/o Philips Patenverwaltung, 22335 Hamburg (DE); Halfmann, Jürgen, c/o Philips Patenverwaltung, 22335 Hamburg (DE); Scholten, Lutz, c/o Philips Patenverwaltung, 22335 Hamburg (DE); Wendt, Matthias, Dr., c/o Philips Patenverwaltung, 22335 Hamburg (DE)
(74) Vertreter: Peters, Carl Heinrich, Dipl.-Ing.

(56) Entgegenhaltungen:
- EP-A- 0 505 159
- EP-A- 0 589 630
- DE-A- 3 819 062
- DE-A- 4 132 881
- US-A- 4 818 908

## Beschreibung

Die Erfindung bezieht sich auf einen elektrischen Antrieb.

Aus der EP 73 503 B ist ein Motor-Steuerungssystem bekannt, bei dem der als bürstenloser Gleichstrommotor ausgebildete Motor Ständerwicklungen, einen Dauermagnetläufer und einen Positionsgeber zur Anzeige der Position des besagten Läufers relativ zu den Ständerwicklungen besitzt und bei dem eine Erregerstrom-Erzeugerschaltung auf das von dem Positionsgeber gelieferte Positionssignal anspricht und den Ständerwicklungen sinusförmige Erregerströme zuführen kann. Dabei wird die Frequenz der sinusförmigen Erregerströme entsprechend dem Positionssignal zur Erzielung eines mit der Drehung des Läufers synchronen magnetischen Drehfeldes gesteuert. Zur Steuerung der Phase des sinusförmigen Erregerstroms für die dynamische Steuerung des Winkels zwischen dem durch die Ständerwicklungen erzeugten magnetischen Drehfeld und der Läuferstellung ist eine mit der Erregerstrom-Erzeugerschaltung gekoppelte Drehmomentwinkel-Steuerschaltung vorgesehen. Das Steuersystem besitzt ferner einen mit dem Läufer gekoppelten Drehzahlfühler zur Anzeige der Läuferdrehzahl, wobei der Drehzahlfühler mit der Drehmomentwinkel-Steuerschaltung so gekoppelt ist, daß die Phase des sinusförmigen Erregerstroms sich in Abhängigkeit von der Läuferdrehzahl ändert. Insbesondere liefert der Positionsgeber digitale Signale, die die Läuferstellung repräsentieren, und der Drehzahlgeber liefert entsprechend digitale Signale, die die Läuferdrehzahl repräsentieren. Ein Speicher enthält abgespeicherte Drehmomentwinkelfaktoren, und es sind Mittel vorgesehen zur Ansteuerung von Drehmomentwinkelfaktoren in diesem Speicher entsprechend den digitalen Läuferdrehzahl-Signalen und zum Addieren des gewählten Drehmomentwinkelfaktors mit dem digitalen Läuferpositions-Signal zur Ableitung eines Signals für die Erregervektorlage. Das bekannte Motor-Steuerungssystem enthält weiterhin Erregerstrom-Erzeugermittel, mit denen den Wicklungen sinusförmige Erregerströme zugeführt werden können, deren Werte den inkrementell entsprechend dem Erregervektorlagensignal angesteuerten Sinuswerten proportional sind.

Aus der DE 41 36 538 Al ist eine Kommutatorschaltung für einen bürstenlosen Gleichstrommotor mit trapezförmiger Ansteuerung bekannt, bei der die Kommutierungsimpulse des Kommutierungscodierers des bürstenlosen Gleichstrommotors dadurch optimiert werden können, daß die Kommutierungsimpulse vorgestellt werden, wobei gleichzeitig die Kommutierungsimpulsbreite optimiert wird. Dadurch soll ein maximaler Wirkungsgrad oder eine maximale Leistungsfähigkeit und ein maximales Drehmoment des Motors über den gesamten Motordrehzahlbereich und den gesamten Motorlastbereich erzielt werden können. Diese Kommutatorschaltung verwendet u.a. einen Muster-ROM-Adressierungsteil mit einem voreinstellbarem Aufzähler, der unter Verwendung des Ausgangssignals eines Binärzählers als Taktsignal aufzählt, der bei jedem Bezugs-Kommutierungsimpuls mit dem Vorstell-Kommutierungswinkel als Voreinstellwert entsprechend der vorliegenden Winkelgeschwindikgiet des Motors und des Laststromes voreingestellt wird, der in einem ROM, in dem als Daten der Vorstell-Kommutierungswinkel des Kommutierungsimpulses gespeichert ist, nach Maßgabe des Ausgangssignals eines Adressierungsteiles gelesen wird, der ein Adressensignal an den ROM abgibt.

Das Motor-Steuerungssystem nach der EP 73 503 Bl benötigt eine sehr genaue Auflösung der die Läuferstellung repräsentierenden digitalen Signale von wenigstens 8 Bit. Die Kommutatorschaltung gemäß der DE 41 36 538 A1 ist mit umfangreichen Speicheranordnungen und Adressierungsteilen für diese Speicheranordnungen ausgestattet.

EP-A-589 630 beschreibt eine Schaltungsanordnung für die automatische Einstellung der Kommutierungsverzögerung in einem bürstenlosen Gleichstrommotor. Dieser Stand der Technik entspricht den Merkmalen des Oberbegriffs des Anspruches 1.

Die Erfindung hat die Aufgabe, einen elektrischen Antrieb zu schaffen, bei dem eine Einstellung des Drehmomentwinkels, d.h. des Phasenwinkels zwischen dem im Ständer erzeugten magnetischen Feld und der Stellung des Läufers, in Abhängigkeit von der Bewegungsgeschwindigkeit des Läufers für einfache Positionssignale mit geringem schaltungstechnischem Aufwand ermöglicht wird. Erfindungsgemäß wird diese Aufgabe gelöst durch einen elektrischen Antrieb mit
- einem fremderregten Elektromotor, der einen Ständer mit in mehreren strengen angeordneten Wicklungen und einen Läufer aufweist,
- einer elektronischen Kommutierungsanordnung zum Beaufschlagen der Stränge des Elektromotors mit elektrischer Energie,
- einer Positionsgeberanordnung zum Abgeben je eines Sensorsignals für jeden Strang des Elektromotors in Abhängigkeit von einer augenblicklichen Position des Läufers gegenüber dem Ständer, wobei jedes der Sensorsignale eine vorgebbare Phasenlage bezüglich der Position des Läufers einnimmt,
- einer Phasenstellstufe zum Hinzufügen einer für alle Sensorsignale gleichmäßigen, von wenigstens der Bewegungsgeschwindigkeit des Läufers abhängigen Phasenverschiebung zur Phasenlage der Sensorsignale, wodurch resultierende Sensorsignale gewonnen werden,
- einem Kurvenformgenerator, dem die resultierenden Sensorsignale zuleitbar sind und in dem aus jedem der resultierenden Sensorsignale für den zugehörigen Strang Kommutierungssignale abgeleitet werden zum in der Kommutierungsanordnung vorzunehmenden Steuern des zeitlichen Verlaufs und der Amplitude der dem Elektromotor zuzuführenden elektrischen Energie und
- einer Regelstufe zum Stellen der Amplitude und der Phasenverschiebung der Zufuhr elektrischer Energie zum Elektromotor in Abhängigkeit von wenigstens der Bewegungsgeschwindigkeit des Läufers,
wobei die Phasenstellstufe umfaßt:
- eine Steuersignal-Erzeugungsstufe, in der für den von der Regelstufe aktuell vorgegebenen Wert der Phasenverschiebung zu jedem einzelnen der Sensorsignale aus der Menge aller Sensorsignale dasjenige als Ersatz-Sensorsignal ausgewählt wird, welches unmittelbar oder invertiert durch geringstmögliche Verzögerung in die Phasenlage des aus dem genannten, einzelnen Sensorsignal abzuleitenden resultierenden Sensorsignals überführbar ist, und von der Steuersignale abgebbar sind, die eine Information über diese Auswahl enthalten,
- eine Sensorsignal-Zuordnungsstufe, der die Sensorsignale von der Positionsgeberanordnung zuführbar sind und in der nach Maßgabe der Steuersignale aus den Sensorsignalen die Ersatz-Sensorsignale abgeleitet und bereitgestellt werden,
- eine Verzögerungszeit-Bestimmungsstufe zum Bestimmen einer der Verzögerung zwischen jedem der Ersatz-Sensorsignale und dem daraus jeweils abzuleitenden resultierenden Sensorsignal entsprechenden Zeitspanne (Verzögerungszeit) aus dem aktuell vorgegebenen Wert der Phasenverschiebung der Bewegungsgeschwindigkeit des Läufers sowie dem Abstand der Phasenlagen der Sensorsignale entlang einer die Position des Läufers beschreibenden Bewegungskoordinate,
- eine Sensorsignal-Ausgabestufe, der die Ersatz-Sensorsignale zuführbar sind und in der die resultierenden Sensorsignale, ausgelöst durch ein Ladesignal, speicherbar und von ihr abgebbar sind, sowie
- eine Ladesignal-Erzeugungsstufe, in der zu jeder Änderung des Wertes eines der Sensorsignale bzw. der Ersatz-Sensorsignale das Ladesignal neu erzeugt und gegenüber dieser Änderung um die in der Verzögerungszeit-Bestimmungsstufe bestimmte Verzögerungszeit verzögert der Sensorsignal-Ausgabestufe zugeführt werden kann.

Bei dem erfindungsgemäßen elektrischen Antrieb können die als Ständer und als Läufer bezeichneten Elemente gegeneinander rotierend oder linear bewegbar sein; auch soll der Fall eingeschlossen sein, daß das als Ständer bezeichnete Element beweglich und das als Läufer bezeichnete Element fest gegenüber einer Bewegungskoordinate des Antriebs angeordnet sind. An die Stelle der Position des Läufers tritt dann eine entsprechende Position des Ständers. Der Eindeutigkeit halber wird jedoch im folgenden von einer Bewegung des Läufers gegenüber dem Ständer ausgegangen.

Dabei läßt sich die Position des Läufers durch eine Bewegungskoordinate beschreiben, die gegenüber dem Ständer fest angeordnet ist. Die Positionsgeberanordnung ist dann ebenfalls fest gegenüber dem Ständer angeordnet. Der Elektromotor ist derart aufgebaut, daß sich entlang der Bewegungskoordinate zyklisch wiederkehrend identische Konstellationen zwischen dem Läufer und dem Ständer ergeben; bei einem rotierenden Elektromotor ist dies bevorzugt eine Umdrehung des Läufers; entsprechendes gilt für einen linear aufgebauten Elektromotor. Gemessen an diesem Bewegungszyklus des Läufers und einem für die Bewegungskoordinate gewählten Nullpunkt weisen dann die Sensorsignale der Positionsgeberanordnung bestimmte Phasenlagen auf. In einer Abwandlung davon kann auch ein Koordinatensystem gewählt werden, welches zu jedem Strang eine Bewegungskoordinate mit einem eigenen Nullpunkt umfaßt. Der Nullpunkt jeder der Bewegungskoordinaten ist dann so gewählt, daß das zugehörige Sensorsignal jedes Stranges bezüglich seiner Bewegungskoordinate in jeweils derselben Phasenlage auftritt. Üblicherweise ist die Positionsgeberanordnung bezüglich des Ständers bzw. des Läufers derart ausgerichtet, daß die Sensorsignale eine Phasenlage bezüglich der Position des Läufers einnehmen, in der sie im Kurvenformgenerator einen Verlauf der Zufuhr elektrischer Energie über der Bewegungskoordinate des Läufers hervorrufen, durch den zumindest in einem vorgegebenen Arbeitspunkt des Elektromotors, d.h. bei einer bestimmten Belastung und einer bestimmten Bewegungsgeschwindigkeit, eine optimale Leistungsabgabe bzw. ein optimales Drehmoment des Elektromotors erreicht wird. Wie sich auch aus den zum Stand der Technik zitierten Schriften ergibt, kann zur Einstellung dieses Arbeitspunktes der Phasenwinkel zwischen den Sensorsignalen und der den Strängen des Elektromotors zugeführten elektrischen Energie verstellt werden. Beim erfindungsgemäßen Antrieb erfolgt dies durch die Phasenstellstufe, in der alle Sensorsignale gleichmäßig mit einer Phasenverchiebung beaufschlagt werden, die dann unmittelbar als Phasenverschiebung der Zufuhr der elektrischen Energie gegenüber der Position des Läufers entlang der Bewegungskoordinate auftritt. Zur Erreichung eines optimalen Drehmoments und damit eines optimalen Wirkungsgrades des erfindungsgemäßen Antriebs in allen Arbeitsbereichen kann die Phasenverschiebung außer von der Bewegungsgeschwindigkeit des Läufers auch beispielsweise von der Belastung des Elektromotors, d.h. dem zu erbringenden Drehmoment, abhängig gemacht werden. Die Vorgabe dieser Phasenverschiebung erfolgt zusammen mit der Vorgabe der Amplitude der dem Elektromotor zugeführten elektrischen Energie in der Regelstufe.

Der erfindungsgemäße elektrische Antrieb basiert somit auf einem Aufbau, wie er auch für einen Antrieb mit unveränderter Phasenlage der Sensorsignale zur Zufuhr der elektrischen Energie einsetzbar ist. Durch die Erfindung wird hier lediglich die Phasenstellstufe eingefügt. Diese bestimmt aus den Sensorsignalen von der Positionsgeberanordnung die resultierenden Sensorsignale für den Kurvenformgenerator durch Hinzufügen einer bezüglich der Bewegungskoordinate des Läufers positiven oder negativen Phasenverschiebung zur Phasenlage der Sensorsignale. Der Erfindung liegt die Erkenntnis zugrunde, daß dabei eine negative Phasenverschiebung, d.h. eine Vorverschiebung (zeitlich oder auch bezüglich der Bewegungskoordinate) der Sensorsignale, insbesondere bei einfachen, rechteckförmigen Sensorsignalen, deren Periode einem Bewegungszyklus des Läufers entspricht, auf Schwierigkeiten stößt. Beim Stand der Technik wird diesen Schwierigkeiten teilweise dadurch begegnet, daß vom Positionsgeber ein entlang der Bewegungskoordinate sehr fein gestuftes Positionssignal abgegeben wird, welches in digitalisierter Form mit einer gewünschten Phasenverschiebung umgerechnet wird. Dieses Verfahren ist bei den genannten einfachen Sensorsignalen nicht anwendbar. Erfindungsgemäß wird daher auch eine negative Phasenverschiebung durch eine zeitliche Verzögerung der Sensorsignale verwirklicht. Dies geschieht jedoch nicht in der theoretisch einfachen Form, daß eine negative Phasenverschiebung durch eine bezüglich des gesamten Bewegungszyklus des Läufers komplementäre positive Phasenverschiebung ausgedrückt wird, da dies zu sehr langen Verzögerungen führen würde, die einerseits technisch schwieriger umzusetzen sind und andererseits Nachteile im Betrieb des Elektromotors hervorrufen würden.

Bei der Erfindung werden vielmehr zwei aufeinander abgestimmte Schritte durchgeführt. Im ersten Schritt wird zu der gewünschten Phasenverschiebung ermittelt, aus welchem der Sensorsignale - ggf. in seiner invertierten Form - das jeweilige, gewünschte resultierende Sensorsignal durch geringstmögliche positive Phasenverschiebung bzw. zeitliche Verzögerung gewonnen werden kann. Diese Information wird in der Steuersignal-Erzeugungsstufe gewonnen und in Form der Steuersignale von ihr abgegeben. Die Steuersignale enthalten somit eine Information über die Auswahl eines Ersatz-Sensorsignals zu jedem der Sensorsignale und außerdem eine Information darüber, ob als Ersatz-Sensorsignal eines der Sensorsignale in invertierter oder nicht invertierter Form herangezogen werden soll. Die Ableitung der Ersatz-Sensorsignale aus den Sensorsignalen selbst erfolgt in der Sensorsignal-Zuordnungsstufe.

Einhergehend mit dieser Bestimmung der Ersatz-Sensorsignale erfolgt in der Verzögerungszeit-Bestimmungsstufe die Bestimmung der Verzögerungszeit, um die das jeweilige Ersatz-Sensorsignal verzögert werden muß, um daraus das dem jeweiligen Sensorsignal zuzuordnende resultierende Sensorsignal zu gewinnen. Diese Verzögerungszeit ist abhängig von der einzustellenden Phasenverschiebung und der Bewegungsgeschwindigkeit des Läufers. Außerdem spielt für die Bestimmung der Ersatz-Sensorsignale und damit der Verzögerungszeit eine Rolle, wie die Phasenlagen der Sensorsignale entlang der Bewegungskoordinate des Läufers über einen Zyklus der Bewegung des Läufers angeordnet bzw. beabstandet sind.

Beim erfindungsgemäßen elektrischen Antrieb wird die Verzögerung der Ersatz-Sensorsignale zur Gewinnung der resultierenden Sensorsignale dadurch vorgenommen, daß die Ersatz-Sensorsignale durch das Ladesignal in die Sensorsignal-Ausgabestufe eingespeichert werden. Vom Augenblick des Einspeicherns an stehen sie als resultierende Sensorsignale an der Sensorsignal-Ausgabestufe zur Verfügung. Das Ladesignal wird in der Ladesignal-Erzeugungsstufe derart erzeugt, daß das Einspeichern der Ersatz-Sensorsignale um die Verzögerungszeit verzögert erfolgt.

Dazu wird zu jeder Änderung, d.h. zu jeder Signalflanke in einem der Sensorsignale ein Ladesignal erzeugt, welches gegenüber dieser Flanke um die Verzögerungszeit verzögert das Einspeichern des Ersatz-Sensorsignals als resultierendes Sensorsignal in die Sensorsignal-Ausgabestufe veranlaßt.

Die Erfindung ist anwendbar auf elektronisch kommutierte, fremderregte (d.h. auch permanentmagneterregte) Elektromotoren, wie sie häufig als Antriebsmotoren für Haushaltsgeräte, Geräte der Unterhaltungselektronik, der Medizintechnik oder auch professioneller Anwendungen eingesetzt werden. Zu den Haushaltsgeräten zählen dabei auch Geräte der Körperpflege. Die Erfindung ermöglicht damit in einfacher Weise einen Betrieb in mehreren Arbeitspunkten mit optimalen Wirkungsgraden. Ein Beispiel für eine derartige Anwendung stellen Küchenmaschinen dar, die im Knetbetrieb bei sehr niedriger Drehzahl und im Mixerbetrieb bei hoher Drehzahl arbeiten müssen. Das erfindungsgemäße Verfahren ermöglicht hierfür jede der gerade anstehenden Aufgaben einen Betrieb mit optimierter Leistungsfähigkeit. Der verhältnismäßig geringe schaltungstechnische Aufwand für die Erfindung begünstigt dabei eine Serienfertigung in hohen Stückzahlen zu günstigen Fertigungskosten.

Mit der erfindungsgemäßen Einstellung der Phasenverschiebung der Sensorsignale kann in einfacher Weise nicht nur ein optimales Antriebsmoment, sondern auch für einen Bremsbetrieb ein maximales Bremsmoment erzeugt werden. Dies kann als elektrische Bremse sehr einfach und wirkungsvoll insbesondere dort ausgenutzt werden, wo eine hohe Betriebssicherheit mit geringen Kosten erreicht werden muß. Ein Beispiel dafür ergibt sich wieder bei den Haushaltsgeräten, beispielsweise bei einer Küchenmaschine, oder bei elektrischen Antrieben für Werkzeugmaschinen.

Die Erfindung hat weiterhin den Vorteil, daß die Lage der Positionsgeberanordnung entlang dr Bewegungskoordinate des Läufers nicht mehr starr mit einer festen Phasenlage verknüpft ist. Damit läßt sich der aus konstruktiven Gründen oder aus Gründen der elektromagnetischen Verträglichkeit günstigste Anbringungsort für die Positionsgeberanordnung wählen, ohne daß dies nachteilige Folgen für die Betriebsweise des Elektromotors hat. Damit läßt sich eine Vereinfachung der Konstruktion sowie eine verbesserte Störsicherheit der Sensorsignale erreichen.

Die Erfindung erlaubt ferner beliebige Einstellungen der Phasenlage zwischen den Sensorsignalen und der Zufuhr der Energie zum Elektromotor, ohne dabei den Stellbereich der Amplitude dieser Energie bzw. der Amplitude der Spannungen an den Strängen des Ständers einzuschränken. Außerdem kann beim erfindungsgemäßen elektrischen Antrieb die Phasenstellstufe mit unterschiedlichen Kurvenformgeneratoren verbunden werden.

In einer vorteilhaften Weiterbildung umfaßt der erfindungsgemäße elektrische Antrieb eine Steuersignal-Modifikationsstufe, der die Steuersignale von der Steuersignal-Erzeugungsstufe sowie ein Bewegungsrichtungssignal zuleitbar sind und von der die Steuersignale, gesteuert durch das Bewegungsrichtungssignal, in bewegungsrichtungskorrigierte Steuersignale umgewandelt werden können, durch die eine für die jeweils vorliegende Bewegungsrichtung des Läufers korrekte Ableitung der Ersatz-Sensorsignale aus den Sensorsignalen vornehmbar ist.

Durch die Steuersignal-Modifikationsstufe werden in einfacher Weise aus den von der Sensorsignal-Zuordnungsstufe bereitgestellten Ersatz-Sensorsignalen bewegungsrichtungskorrigierte Ersatz-Sensorsignale erzeugt. Damit ist eine beliebige Einstellung der Phasenlage bzw. Phasenverschiebung für beide Bewegungsrichtungen des Elektromotors möglich. Wie bereits die Phasenstellstufe insgesamt gegenüber den übrigen Elementen des elektrischen Antriebs weist auch die Steuersignal-Modifikationsstufe innerhalb der Phasenstellstufe eine modulartige Struktur auf. Das bedeutet, daß ein elektrischer Antrieb mit einer Phasenstellstufe gemäß der Erfindung, jedoch auch ohne sie betrieben werden kann. Entsprechend kann die Steuersignal-Modifikationsstufe ohne Veränderung der übrigen Elemente des erfindungs gemäßen Antriebs eingefügt werden, wenn ein Antrieb wahlweise für zwei Bewe gungsrichtungen ausgelegt sein soll.

In einer bevorzugten Weiterbildung des erfindungsgemäßen Antriebs enthält dieser eine Bewegungsrichtungs-Detektionsstufe zum Detektieren der aktuellen Bewegungsrichtung des Läufers und zum Abgeben des demgemäß ausgebildeten Bewegungsrichtungssignals an die Steuersignal-Modifikationsstufe. Auch die Bewegungsrichtungs-Detektionsstufe läßt sich als modulartige Baugruppe ohne Veränderung der übrigen Elemente des erfindungsgemäßen Antriebs hinzufügen. Bevorzugt kann die aktuelle Bewegungsrichtung des Läufers durch die Bewegungsrichtungs-Detektionsstufe aus einem Vergleich der Phasenlagen wenigstens zweier der Sensorsignale bestimmt werden.

Zum Bestimmen der Bewegungsgeschwindigkeit des Läufers enthält der erfindungsgemäße elektrische Antrieb vorzugsweise eine Geschwindigkeits-Meßstufe. Als solche kann ein an sich bekannter Tachogenerator dienen. In einer bevorzugten Ausgestaltung wird jedoch eine Geschwindigkeits-Meßstufe eingesetzt, die unmittelbar die Sensorsignale auswertet und durch die somit ein gesonderter Tachogenerator eingespart werden kann. In einer derartigen Geschwindigkeits-Meßstufe ist die zeitliche Abfolge vorgebbarer Abschnitte der Sensorsignale mit einem Zeitnormal vergleichbar und ist aus diesem Vergleich ein die Bewegungsgeschwindigkeit darstellendes Geschwindigkeitssignal zur Abgabe an die Verzögerungszeit-Bestimmungsstufe ableitbar. Beispielsweise kann dazu ein Zeitintervall zwischen den letzten beiden Signalflanken der Sensorsignale gemessen und mit dem Zeitnormal verglichen werden oder es können die innerhalb eines bestimmten Zeitnormals eingehenden Signalflanken der Sensorsignale gezählt werden. Das erstere Verfahren ist insbesondere für niedrige Bewegungsgeschwindigkeiten zu bevorzugen; es kommt jedoch auch eine Kombination beider Verfahren in Betracht, beispielsweise eine Anwendung des erstgenannten Verfahrens für niedrige Bewegungsgeschwindigkeiten und eine Anwendung des letztgenannten Verfahrens für hohe Bewegungsgeschwin digkeiten.

Nach einer anderen Ausgestaltung weist der erfindungsgemäße elektrische Antrieb das Merkmal auf, daß zur Bildung der Sensorsignale in der Positionsgeberanordnung wenigstens Teilabschnitte von durch die Bewegung des Läufers im Ständer induzierten Spannungen herangezogen werden und daß die von der Phasenstellstufe zum Sensorsignal jedes Strangs hinzugefügte Phasenverschiebung die Phasenlage der zugehörigen Strangspannung bestimmt. Dabei ist als Strangspannung diejenige elektrische Spannung bezeichnet, die von der Kommutierungsanordnung am zugehörigen Strang zu dessen Beaufschlagung mit elektrischer Energie angelegt wird. Die Auswertung der induzierten Spannungen kann dabei unmittelbar auf elektronischem Wege erfolgen; damit lassen sich gesonderte, mechanische Vorrichtungen zur Bestimmung der Position des Läufers vermeiden; die Positionsgeberanordnung wird dann durch eine einfache, elektronische Schaltung gebildet.

Zwar sind beim erfindungsgemäßen Antrieb Sensorsignale unterschiedlicher Verläufe verarbeitbar, vorzugsweise werden von der Positionsgeberanordnung als Sensorsignale jedoch rechteckförmige Signale erzeugt, deren Flanken ein Maß für die Position des Läufers bezüglich des zugehörigen Strangs bilden. Besonders einfache Verhältnisse ergeben dabei, wenn die rechteckförmigen Sensorsignale einen Tastgrad von wenigstens nahezu 50 % aufweisen und ihre Phasenlagen zyklisch im wesentlichen gleich beabstandet über einen Bewegungszyklus des Läufers verteilt angeordnet sind. Bevorzugt entspricht dabei eine Periode des rechteckförmigen Sensorsignals einem Bewegungszyklus des Läufers.

Ein Ausführungsbeispiel der Erfindung ist in der Zeichnung dargestellt und wird im nachfolgenden näher beschrieben. Es zeigen
- Fig. 1: ein Blockschaltbild eines erfindungsgemäßen elektrischen Antriebs,
- Fig. 2 bis 4: Diagramme zur Erläuterung der Vornahme der Phasenverschiebung in dem erfindungsgemäßen elektrischen Antrieb,
- Fig. 5: ein Blockdiagramm zur Erläuterung der Funktion und des Signalflusses in einer Phasenstellstufe des erfindungsgemäßen elektrischen Antriebs,
- Fig. 6: das Blockschaltbild eines Ausführungsbeispiels für eine Phasenstellstufe des erfindungsgemäßen elektrischen Antriebs,
- Fig. 7: ein detaillierteres Blockschaltbild eines Ausführungsbeispiels für eine Steuersignal-Erzeugungsstufe in der Phasenstellstufe,
- Fig. 8: ein Ausführungsbeispiel für eine Sensorsignal-Zuordnungsstufe und eine Sensorsignal-Ausgabestufe in der Phasenstellstufe nach Fig. 6,
- Fig. 9: ein Ausführungsbeispiel für eine Verzögerungszeit-Bestimmungsstufe, eine Ladesignal-Erzeugungsstufe mit Flankendetektion der Sensorsignale sowie eine Geschwindigkeits-Meßstufe in der Phasenstellstufe gemäß Fig. 6,
- Fig. 10: ein Ausführungsbeispiel für eine Steuersignal-Modifikationsstufe innerhalb der Phasenstellstufe nach Fig. 6 und
- Fig. 11: ein Beispiel für eine Bewegungsrichtungs-Detektionsstufe für die Phasenstellstufe nach Fig. 6.

Dabei sind in den verschiedenen Figuren übereinstimmende Elemente mit denselben Bezugszeichen versehen.

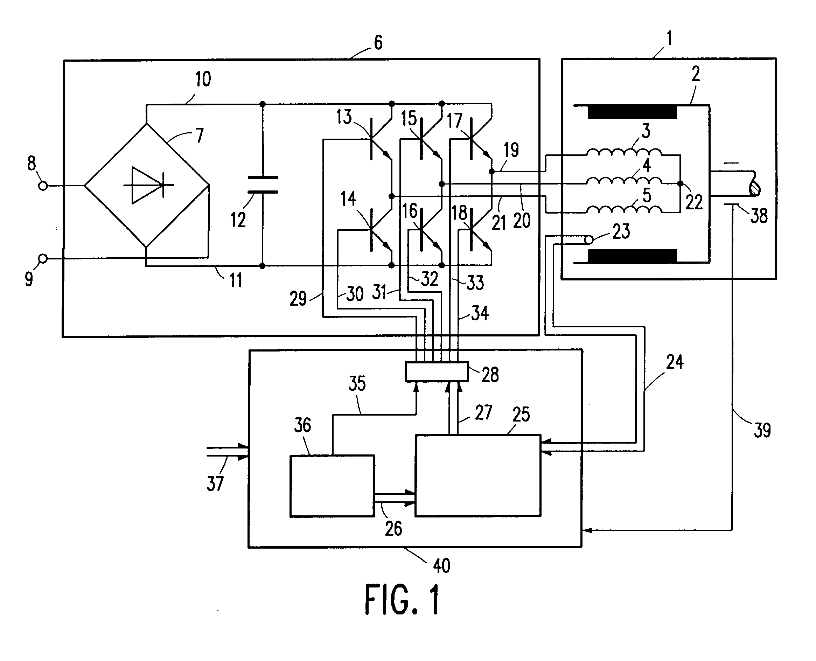

Fig. 1 zeigt schematisch einen Elektromotor 1 mit einem Ständer und einem permanenterregten Läufer 2. Der Ständer weist Wicklungen auf, die im vorliegenden Beispiel in drei Strängen 3, 4, 5 angeordnet sind. Die drei Stränge 3, 4, 5 bilden in diesem Beispiel bevorzugt ein Drehstromsystem. Sie werden durch eine elektronische Kommutierungsanordnung 6 mit elektrischer Energie beaufschlagt Die elektronische Kommutierungsanordnung 6 umfaßt einen Netzgleichrichter 7, dem an Eingangsanschlüssen 8, 9 Energie vorzugsweise aus einem Wechselstromnetz zuführbar ist. An Ausgangsanschlüssen 10, 11 zwischen denen ein Glättungskondensator 12 angeordnet ist, gibt der Netzgleichrichter 7 die elektrische Energie mittels einer Speisegleichspannung ab. Zwischen den Ausgangsanschlüssen 10, 11 des Netzgleichrichters 7 sind ferner drei Reihenschaltungen je zweier elektronischer Schaltvorrichtungen angeordnet, die im Beispiel nach Fig. 1 symbolisch als bipolare Transistoren dargestellt sind. Diese Schaltvorrichtungen sind mit den Bezugszeichen 13, 14 bzw. 15, 16 bzw. 17, 18 versehen. Der Verbindungspunkt jeder der Reihenschaltungen zweier Schaltvorrichtungen 13 und 14, 15 und 16 bzw. 17 und 18 bildet je eine Anzapfung 19, 20 bzw. 21 der elektronischen Kommutierungsanordnung 6. Dabei ist die erste Anzapfung 19 mit dem ersten Strang 3, die zweite Anzapfung 20 mit dem zweiten Strang 4 und die dritte Anzapfung 21 mit dem dritten Strang 5 der Wicklungen des Ständers verbunden: die zweiten Anschlüsse jedes der Stränge 3, 4, 5 sind in einem gemeinsamen Verbindungspunkt 22 zusammengeführt. Als Drehstromsystem bilden die Stränge 3, 4, 5 somit eine Sternschaltung.

Der Elektromotor 1 in Fig. 1 enthält ferner eine symbolisch angedeutete Positionsgeberanordnung 23, von der für jeden der Stränge 3, 4, 5 des Elektromotors ein Sensorsignal über eine Leitung 24 abgegeben wird. Dieses Sensorsignal liefert eine Information über die augenblickliche Position des Läufers gegenüber dem zugehörigen Strang 3, 4 bzw. 5 des Ständers. Wird für die Position des Läufers 2 eine Bewegungskoordinate festgelegt, wobei eine Umdrehung des Läufers 2 einem Bewegungszyklus entspricht, nimmt jedes der Sensorsignale eine vorgebbare Phasenlage bezüglich dieser Bewegungskoordinate ein. Dabei ist die Phasenlage von der Bauart und Lage der Positionsgeberanordnung abhängig.

Die Leitung 24 für die Sensorsignale ist mit einer Phasenstellstufe 25 verbunden, der weiterhin über eine Leitung 26 ein Signal zugeführt wird, welches eine Information über einen Sollwert enthält, auf den die Phasenlage der Sensorsignale eingestellt werden soll. Die dementsprechend von der Phasenstellstufe 25 erzeugten resultierenden Sensorsignale werden über eine Leitung 27 einem Kurvenformgenerator 28 zugeführt. In diesem Kurvenformgenerator 28 werden aus jedem der resultierenden Sensorsignale von der Leitung 27 für den zugehörigen Strang 3, 4 bzw. 5 des Ständers Kommutierungssignale abgeleitet und über Leitungen 29, 30, 31, 32, 33 bzw. 34 Steueranschlüssen der Schaltvorrichtungen 13, 14, 15, 16, 17 bzw. 18 zugeführt. Durch den Kurvenformgenerator 28 werden damit die Schaltvorrichtungen 13 bis 18 in der Weise gesteuert, daß der Elektromotor 1 im wesentlichen durch die Grundschwingung der an den Strängen 3 bis 5 erzeugten Spannungen betrieben wird, wobei diese Spannungen im Beispiel nach Fig. 1 vorzugsweise ein dreiphasiges Drehfeld ergeben. Vorteilhaft werden dazu die Schaltvorrichtungen 13 bis 18 mit pulsweitenmodulierten Signalen gesteuert. Die Amplitude der Grundschwingung der Spannung an einem Strang 3, 4 bzw. 5 bzw. ihr Effektivwert wird ebenfalls durch den Kurvenformgenerator 28 bestimmt, dem dazu über eine Leitung 35 ein eine Information darüber lieferndes Signal zugeleitet wird. Auf diese Weise steuert der Kurvenformgenerator 28 den Energiefluß in den Elektromotor.

Die Leitungen 26 und 35 für die Signale mit den Informationen über den Sollwert der Phasenlage der Sensorsignale bzw. über die Amplitude oder den Effektivwert der Spannung an den Strängen 3, 4 bzw. 5 sind mit einer Regelstufe 36 verbunden. Die Regelstufe 36 ist zum Stellen der Amplitude und der Phasenverschiebung der Zufuhr elektrischer Energie zum Elektromotor 1 eingerichtet. In der Regelstufe 36 werden die Signale auf den Leitungen 26 und 35 beispielsweise beeinflußt durch eine Vorgabe für die gewünschte Bewegungsgeschwindigkeit des Läufers, aber gegebenenfalls auch durch die Belastung des Elektromotors 1. Diese externen Vorgaben sind schematisch durch eine Leitung 37 angedeutet. In der Regelstufe 36 kann dann beispielsweise aus einem Soll-Ist-Vergleich für die Bewegungsgeschwindigkeit des Läufers 2 ein Signal auf der Leitung 35 erzeugt werden, und über die Leitung 26 kann beispielsweise gemäß dem Istwert der Bewegungsgeschwindigkeit des Läufers 2 ein Signal über den zugehörigen Sollwert der Phasenlage der resultierenden Sensorsignale auf der Leitung 27 abgegeben werden. Die Bewegungsgeschwindigkeit des Läufers 2 kann in einem Tachogenerator 38 bestimmt werden, der über eine Leitung 39 ein entsprechendes Signal abgibt. In einer Abwandlung des elektrischen Antriebs nach Fig. 1 kann dafür auch eine Geschwindigkeits-Meßstufe Verwendung finden, die die Sensorsignale von der Positionsgeberanordnung 23 auswertet. Der Tachogenerator 38 kann dann entfallen.

Aus Fig. 1 ist der modulare Aufbau des gezeigten elektrischen Antriebs erkennbar. Wird nämlich die Phasenstellstufe 25 entfernt und die Leitung 24 unmittelbar mit der Leitung 27 verbunden, erhält man ohne Veränderung an den übrigen Elementen des Antriebs eine Ausführung mit unveränderter Phasenlage der (resultierenden) Sensorsignale.

Während in Fig. 1 die Schaltungselemente, über die die Energiezufuhr zum Elektromotor 1 erfolgt, in der elektronischen Kommutierungsanordnung 6 zusammengefaßt sind, sind alle der Steuerung bzw. der Regelung dienenden Elemente in einer Baugruppe 40 eingeschlossen.

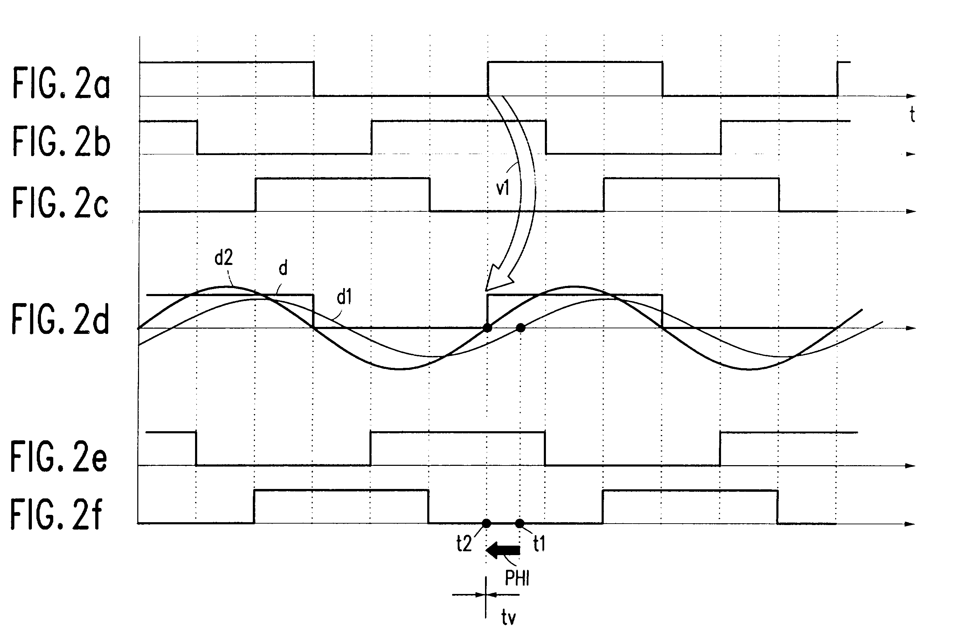

Anhand der Fig. 2 bis 4 soll im folgenden die grundsätzliche Wirkungsweise der Phasenstellstufe 25 erläutert werden. Dabei wird in Fig. 2 von dem Fall ausgegangen, daß die Phasenstellstufe 25 in die Sensorsignale keine Phasenverschiebung einführt. Fig. 2 zeigt somit einen Betriebsfall, wie er sich auch ohne die Phasenstellstufe 25 ergeben würde. Fig. 2a) zeigt den zeitlichen Verlauf des Sensorsignals zum ersten Strang 3 des Ständers. Dabei ist mit t die Zeit bezeichnet, ebensogut kann Fig. 2a) als Auftragung des Sensorsignals zum ersten Strang 3 über der Bewegungskoordinate des Läufers 2 angesehen werden. Der Einfachheit halber ist eine für den vom Diagramm nach Fig. 2 abgedeckten Zeitraum konstante Bewegungsgeschwindigkeit des Läufers 2 angenommen. Die Fig. 2b) und 2c) zeigen entsprechend die zeitlichen Verläufe der Sensorsignale zum zweiten Strang 4 bzw. zum dritten Strang 5. Alle Sensorsignale haben einen rechteckförmigen Verlauf, dessen Periodendauer einem Bewegungszyklus, hier einer Umdrehung, des Läufers 2 entspricht. Der Tastgrad der rechteckförmigen Sensorsignale nach Fig. 2a) bis Fig. 2c) beträgt 50 %, ihre Phasenlagen über der Zeitkoordinate t (bzw. der Bewegungskoordinate) sind zyklisch gleich beabstandet über einen Bewegungszyklus des Läufers 2 verteilt angeordnet. Dies entspricht dem bereits erwähnten Drehstromsystem.

Dem Betriebsbeispiel nach Fig. 2 liegt die Annahme zugrunde, daß die Phasenlage der Sensorsignale auf die Phasenlage einer durch die Bewegung des Läufers 2 im Ständer induzierten Spannung bezogen ist. Diese induzierte Spannung ist als Sinuskurve d1 in Fig. 2d) beispielhaft eingetragen. Mit d2 ist die Grundschwingung der der Energiezufuhr zum ersten Strang 3 dienenden Spannung an diesem Strang 3 (Strangspannung) bezeichnet. Entsprechend der Ausbildung des Kurvenformgenerators 28 wird zur Erzeugung der Grundschwingung d2 der Strangspannung am ersten Strang 3 der in Fig. 2d) skizzierte, rechteckförmige und zur Unterscheidung mit d bezeichnete Verlauf des resultierenden Sensorsignals für den ersten Strang benötigt. Im Beispiel der Fig. 2 ist dieses resultierende Sensorsignal identisch mit dem zugehörigen Sensorsignal von der Positionsgeberanordnung 23, da eine Phasenverschiebung von Null angenommen ist. Entsprechend ergibt sich die einzustellende Verzögerungszeit tv ebenfalls zu Null. In Fig. 2 ist außerdem mit t1 der Zeitpunkt eines Nulldurchgangs der im ersten Strang 3 durch die Bewegung des Läufers 2 induzierten Spannung d1 und mit t2 der Zeitpunkt des zugehörigen Nulldurchgangs der Grundschwingung d2 der Strangspannung am ersten Strang 3 eingetragen. Mit PHI ist der Phasenwinkel zwischen der Grundschwingung d2 der Strangspannung und der induzierten Spannung d1 angedeutet. Dieser Phasenwinkel PHI bestimmt mit der Phasenlage des Sensorsignals bzw. im vorliegenden Beispiel der dazu in fester Phasenbeziehung stehenden Phasenlage der induzierten Spannung d1 die Phasenlage des resultierenden Sensorsignals d und damit der Grundschwingung d2 der Strangspannung. Über die Vorgabe des Phasenwinkels PHI wird in der Phasenstellstufe 25 die Phasenverschiebung eingestellt; eine Information über den Sollwert dieses Phasenwinkels PHI wird über die Leitung 26 geführt.

So, wie aus dem Sensorsignal gemäß Fig. 2a) das resultierende Sensorsignal gemäß Fig. 2d) ohne Verzögerung (tv=0) abgeleitet wird, werden aus dem Sensorsignal gemäß Fig. 2b) das resultierende Sensorsignal für den zweiten Strang 4 gemäß Fig. 2e) und aus dem Sensorsignal nach Fig. 2c) das resultierende Sensorsignal gemäß Fig. 2f) für den dritten Strang 5 abgeleitet.

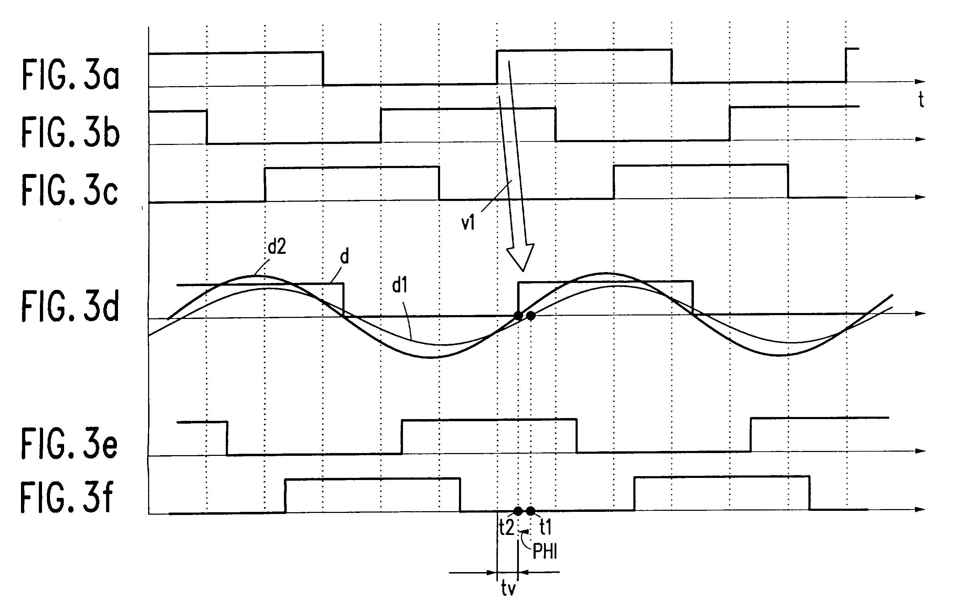

Fig. 3 zeigt einen Betriebsfall, in dem gegenüber Fig. 2 durch die Phasenstellstufe 25 eine Verzögerung der resultierenden Sensorsignale gegenüber den zugehörigen Sensorsignalen aus der Positionsgeberanordnung 23 durchgeführt wird. Dabei erfolgt eine Phasenverschiebung der resultierenden Sensorsignale und damit der Grundschwingung d2 der Strangspannung zu einer späteren zeitlichen Lage hin. Die einzustellende Verzögerungszeit tv entspricht unmittelbar dieser Phasenverschiebung. Im Beispiel der Fig. 3 verringert sich damit der Betrag des Phasenwinkels PHI, d.h. das Voreilen der Grundschwingung d2 gegenüber der induzierten Spannung dl wird verringert. Während die Signalverläufe in den Fig. 3a) bis c) mit denjenigen der Fig. 2a) bis c) identisch sind, zeigen die Fig. 3d) bis f) die um tv verzögerten, resultierenden Sensorsignale.

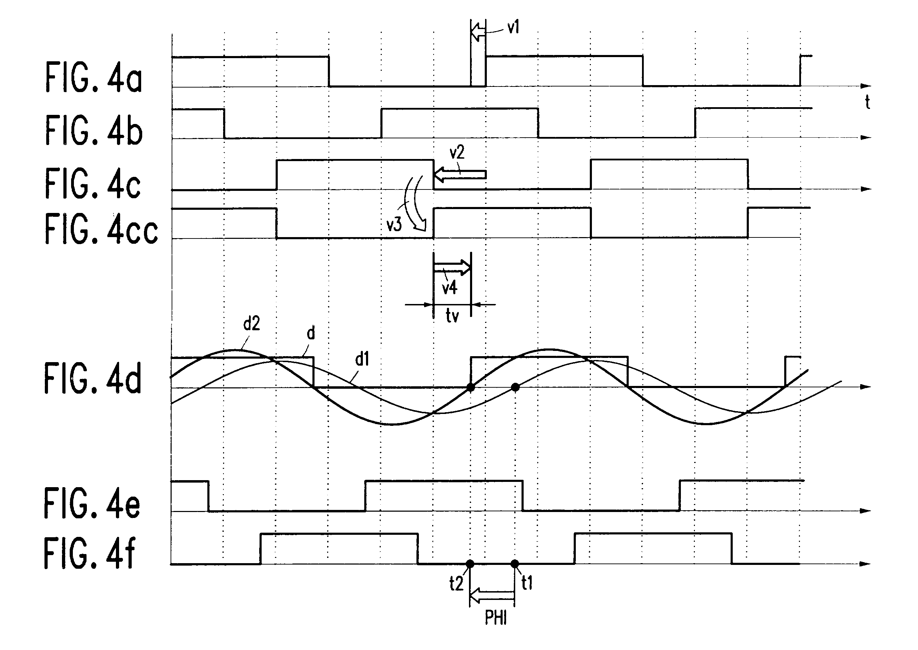

Fig. 4 zeigt ein Beispiel der Einstellung einer Phasenverschiebung durch die Phasenstellstufe 25, bei der der Betrag des Phasenwinkels PHI gegenüber dem Fall ohne Verzögerung gemäß Fig. 2 vergrößert werden soll. Im Ergebnis bedeutet dies eine negative Verzögerung zwischen dem Sensorsignal und dem daraus abzuleitenden resultierenden Sensorsignal. Im Betriebsbeispiel nach Fig. 3 wurde jedes der resultierenden Sensorsignale unmittelbar aus seinem zugehörigen Sensorsignal abgeleitet, d.h. z.B. das resultierende Sensorsignal für den ersten Strang 3 wurde unmittelbar aus dem von der Positionsgeberanordnung 23 stammenden Sensorsignal für den ersten Strang abgeleitet usw.. Aufgrund des geringen Wertes der im Betriebsbeispiel nach Fig. 3 vorzunehmenden Verzögerung bildet dort das Sensorsignal von der Positionsgeberanordnung 23 unmittelbar das Ersatz-Sensorsignal selbst, d.h. beispielweise das Sensorsignal gemäß Fig. 3a) zum ersten Strang 3 bildet auch dessen Ersatz-Sensorsignal usw.. Dieses Sensorsignal zum ersten Strang ist nämlich durch geringstmögliche Verzögerung in die Phasenlage des resultierenden Sensorsignals gemäß Fig. 3d) zum ersten Strang 3 überführbar.

Im Betriebsfall nach Fig. 4 tritt dagegen der Fall auf, daß für eine Überführung des von der Positionsgeberanordnung 23 beispielsweise zum ersten Strang 3 gelieferten Sensorsignals in die Phasenlage des resultierenden Sensorsignals für den ersten Strang 3 eine Verzögerung um beinahe eine ganze Periode der Sensorsignale bzw. beinahe einen ganzen Bewegungszyklus des Läufers 2 notwendig wäre. Abgesehen von dem erhöhten Aufwand für derartig lange Verzögerungszeiten bedingen diese auch eine sehr träge Reaktion des Elektromotors 1 auf etwaige Änderungen der Bewegungsgeschwindigkeit. Daher wird erfindungsgemäß zu jedem einzelnen der Sensorsignale aus der Menge aller Sensorsignale ein Ersatz-Sensorsignal ausgewählt. Diese Auswahl erfolgt derart, daß das Ersatz-Sensorsignal unmittelbar oder invertiert durch geringstmögliche Verzögerung in die Phasenlage des resultierenden Sensorsignals zu dem jeweils betrachteten Strang überführt werden kann. Somit nimmt die Verzögerungszeit tv stets den kleinstmöglichen Wert an. In Fig. 4 ist dies am Beispiel des Sensorsignals für den ersten Strang 3 gemäß Fig. 4a) dargestellt. Aus diesem Sensorsignal soll ein resultierendes Sensorsignal gemäß Fig. 4d) abgeleitet werden, was einer Verschiebung in Voreilrichtung gemäß dem mit v1 bezeichneten Pfeil entspricht. In Richtung dieser Phasenverschiebung v1 wird nun ausgehend vom Sensorsignal der Positionsgeberanordnung 23 gemäß Fig. 4a) die nächste Signalflanke eines der drei Sensorsignale der Fig. 4a) bis c) ermittelt. Diese nächste Signalflanke findet sich im Sensorsignal zum dritten Strang 5. Die genannte Suche ist in Fig. 4 durch den Pfeil v2 symbolisiert.

Da die Signalflanke, von der im Sensorsignal ausgegangen wurde, eine ansteigende Signalflanke ist, die bei der Suche gemäß dem Pfeil v2 aufgefundene Signalflanke jedoch eine abfallende Flanke darstellt, wird zur Bildung des Ersatz-Sensorsignals in einem weiteren, durch einen Pfeil v3 angedeuteten Schritt eine Invertierung des aufgefundenen Sensorsignals vorgenommen. Das durch gewonnene und in Fig. 4cc) dargestellte Signal stellt dann das Ersatz-Sensorsignal zum Sensorsignal des ersten Strangs dar.

Die vorstehend beschriebene Vorgehensweise ist bevorzugt auf Sensorsignale mit einem Tastgrad von wenigstens nahezu 50 % anwendbar. Wird dagegen durch eine Invertierung eines Sensorsignals ein auch durch Verzögerung nicht als resultierendes Sensorsignal verwertbares Signal erhalten, müßte die mit dem Pfeil v2 symbolisierte Suche bis zu einer gleichsinnigen Signalflanke vorgenommen werden. Als Ersatz-Sensorsignal käme im Beispiel nach Fig. 4 das in Fig. 4b) dargestellte Sensorsignal des zweiten Strangs in Frage; die Verzögerungszeit tv würde sich in diesem Fall um 1/6 des Bewegungszyklus verlängern.

Mit dem Pfeil v4 ist in Fig. 4 schließlich die Verzögerung des Ersatz-Sensorsignals gemäß Fig. 4cc) symbolisiert, durch die das in Fig. 4d) dargestellte und mit dem Bezugszeichen d versehene resultierende Sensorsignal zum ersten Strang 3 erhalten wird. Es ist zu erkennen, daß trotz geforderter negativer Phasenverschiebung entsprechend einer Vergrößerung des Betrages des negativen Phasenwinkels PHI eine positive Verzögerungszeit tv von geringem Betrag erhalten wird. Damit sind Phasenverschiebungen in beiden Richtungen durch einfache Verzögerungen mit kurzen Verzögerungszeiten erzielbar, was einer schnellen Reaktion auf etwaige Drehzahländerungen und somit einer genaueren Einstellbarkeit des Phasenwinkels PHI auch im dynamischen Fall zugute kommt.

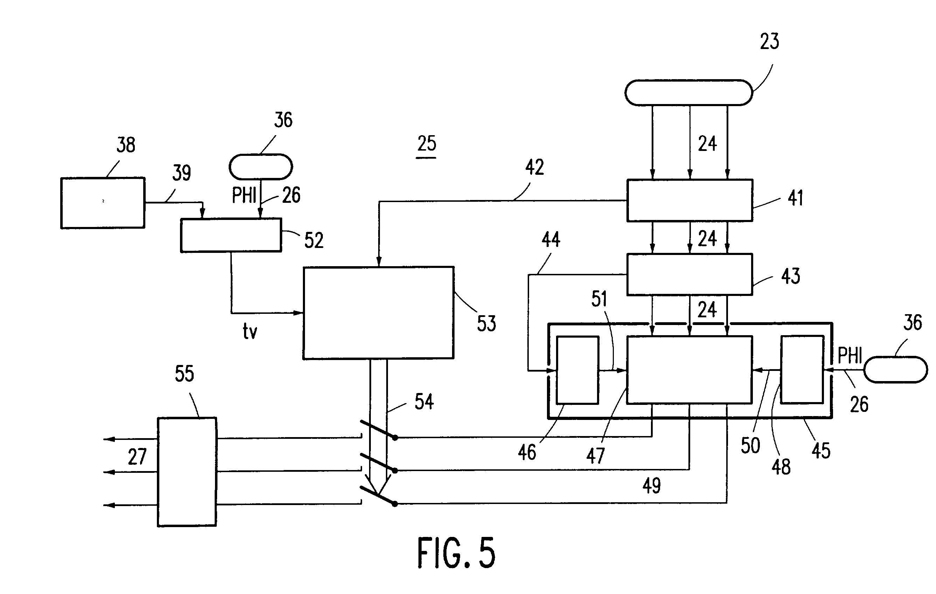

Fig. 5 zeigt ein Block- bzw. Signalflußdiagramm, durch welches Aufbau und Funktion der Phasenstellstufe des erfindungsgemäßen elektrischen Antriebs an einem Beispiel erläutert werden sollen. Der Phasenstellstufe 25 werden darin von der Positionsgeberanordnung 23 in beschriebener Weise über die Leitung 24 die Sensorsignale zugeführt. In einem ersten Schritt werden in einer Flankendetektionsstufe 41 alle Signalflanken in allen Sensorsignalen detektiert. Jedesmal, wenn eine Signalflanke in einem der Sensorsignale auftritt, wird von der Flankendetektionsstufe 41 ein Verzögerungs-Startsignal auf einer Startleitung 42 abgegeben, vorzugsweise in Form eines kurzzeitigen Impulses. Im nächsten Schritt werden die Sensorsignale von der Leitung 24 einer Bewegungsrichtungs-Detektionsstufe 43 zugeführt. Von dieser wird ein Bewegungsrichtungssignal auf einer Bewegungsrichtungs-Signalleitung 44 abgegeben.

Im dritten Schritt werden die Sensorsignale von der Leitung 24 einem Block 45 zugeführt, der die Funktionen einer Steuersignal-Modifikationsstufe 46, einer Sensorsignal-Zuordnungsstufe 47 und einer Steuersignal-Erzeugungsstufe 48 auf sich vereint. Dabei wird der Steuersignal-Erzeugungsstufe 48 von der Regelstufe 36 über die Leitung 26 das Signal mit der Information über den Sollwert der Phasenlage der Sensorsignale, d.h. über den Phasenwinkel PHI, zugeführt. Die Steuersignal-Modifikationsstufe 46 ist ihrerseits mit der Bewegungsrichtungs-Signalleitung 44 zur Zufuhr des Bewegungsrichtungssignals verbunden.

Der Block 45 in Fig. 5 und darin insbesondere die Sensorsignal-Zuordnungsstufe erhalten die Sensorsignale von der Leitung 24 zugeführt und leiten daraus bewegungsrichtungskorrigierte Ersatz-Sensorsignale ab, die über Verbindungsleitungen 49 abgegeben werden. Für die Bildung dieser bewegungsrichtungskorrigierten Ersatz-Sensorsignale wird eine Information einerseits aus der Steuersignal-Erzeugungsstufe 48 und andererseits aus der Steuersignal-Modifikationsstufe 46 herangezogen. Auf einen beispielhaften Aufbau dieser Stufen wird im nachfolgenden noch näher eingegangen werden. Wie anhand der Fig. 4 vorstehend erläutert wurde, kann aus den bekannten zeitlichen Verläufen der Sensorsignale und dem gewünschten Phasenwinkel PHI eine Information darüber gewonnen werden, wie das Ersatz-Sensorsignal zu jedem der Sensorsignale von der Positionsgeberanordnung 23 ausgewählt wird. Diese Information liegt in Form von Steuersignalen vor, die von der Steuersignal-Erzeugungsstufe 48 der Sensorsignal-Zuordnungsstufe 47 zugeführt werden. Dies ist im Block 45 schematisch durch eine Verbindung 50 angedeutet.

Andererseits wird in der Steuersignal-Modifikationsstufe 46 aus dem Bewegungsrichtungssignal eine Information darüber gewonnen, wie die Zuordnung bzw. Ableitung der Ersatz-Sensorsignale aus den Sensorsignalen von der Positionsgeberanordnung 23 entsprechend der detektierten Bewegungsrichtung korrigiert werden muß. Durch diese Information, deren Übertragung im Block 45 schematisch durch eine Verbindung 51 dargestellt ist, werden aus den Ersatz-Sensorsignalen bewegungsrichtungskorrigierte Ersatz-Sensorsignale abgeleitet. In einem nachfolgend beschriebenen Ausführungsbeispiel erfolgt dies bevorzugt dadurch, daß die genannte Information zur Ableitung bewegungsrichtungskorrigierter Steuersignale aus den Steuersignalen von der Steuersignal-Erzeugungsstufe 48 herangezogen wird.

Die Berechnung der Verzögerungszeit, um die die (bewegungsrichtungskorrigierten) Ersatz-Sensorsignale zum Erhalt der resultierenden Sensorsignale verzögert werden müssen, erfolgt in einer Verzögerungszeit-Bestimmungsstufe 52. Da der Wert der Verzögerungszeit tv von der Bewegungsgeschwindigkeit und dem Phasenwinkel PHI ahängt, ist der Verzögerungszeit-Bestimmungsstufe 52 eine entsprechende Information aus der Regelstufe 36 über die Leitung 26 sowie aus dem Tachogenerator 38 über die Leitung 39 zuzuführen. Wie schon ausgeführt, kann anstelle des Tachogenerators 38 auch eine andere ein Signal mit einer Information über die Bewegungsgeschwindigkeit des Läufers 2 liefernde Quelle zum Einsatz kommen.

Von der Verzögerungszeit-Bestimmungsstufe 52 wird eine Information über den Wert der Verzögerungszeit tv an eine Ladesignal-Erzeugungsstufe 53 geleitet. Diese Ladesignal-Erzeugungsstufe 53 erhält ferner über die Startleitung 42 mit dem Verzögerungs-Startsignal eine Information über die Lage der Flanken der Sensorsignale. Aus diesen Informationen wird ein Ladesignal erzeugt, das in der Weise ausgebildet ist, daß die resultierenden Sensorsignale um die Verzögerungszeit tv gegenüber den bewegungsrichtungskorrigierten Ersatz-Sensorsignalen verzögert erscheinen. In Fig. 5 ist dies symbolisch so dargestellt, daß durch das vorzugsweise impulsförmige Ladesignal über eine Ladesignalleitung 54 Schalter geschlossen werden, durch die beim Auftreten des Ladesignals die bewegungsrichtungskorrigierten Ersatz-Sensorsignale von den Verbindungsleitungen 49 an eine Sensorsignal-Ausgabestufe 55 weitergegeben werden. Mit dieser Weitergabe stehen die bewegungsrichtungskorrigierten Ersatz-Sensorsignale als resultierende Sensorsignale auch an der Leitung 27 zur Abgabe an den Kurvenformgenerator 28 bereit. Die Verzögerung um die Verzögerungszeit tv wird somit in einfacher Weise durch ein verzögertes Einspeichern der bewegungsrichtungskorrigierten Ersatz-Sensorsignale in die Sensorsignal-Ausgabestufe 55 erreicht. In einer Abwandlung der Darstellung können die durch die Ladesignalleitung 54 angesteuerten Schalter in den Verbindungsleitungen 49 begrifflich auch mit der Sensorsignal-Ausgabestufe 55 zusammengefaßt sein. Die Ladesignalleitung 54 wird dann unmittelbar an die Sensorsignal-Ausgabestufe 55 geführt.

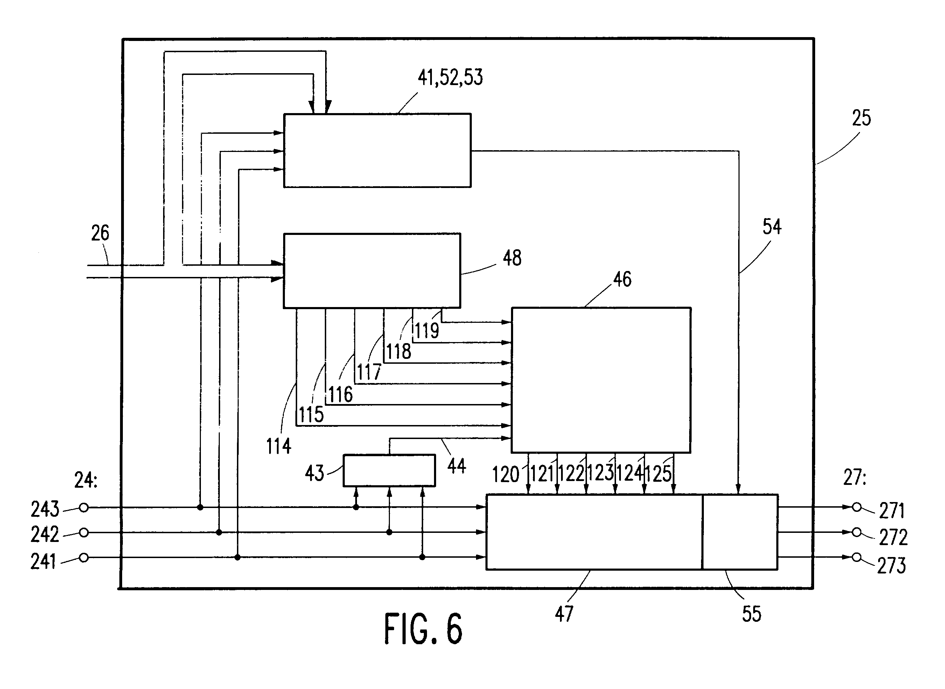

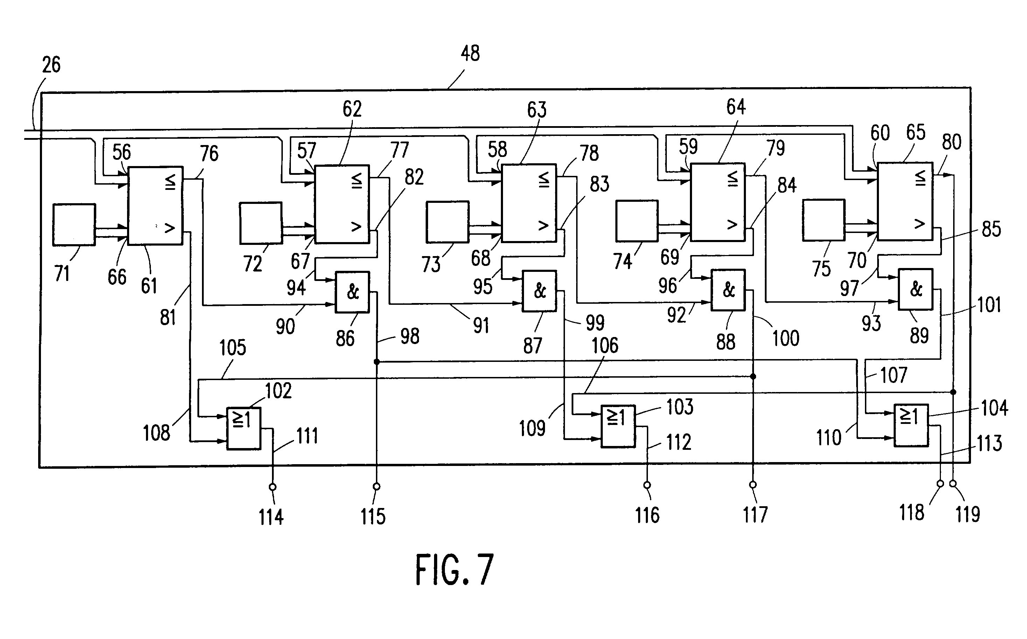

Fig. 6 zeigt ein übersichtsartiges Blockschaltbild einer praktischen Ausführungsform der Phasenstellstufe des erfindungsgemäßen elektrischen Antriebs. Die Fig. 7 bis 11 zeigen dazu beispielhaft detailliertere Schaltbilder für die Schaltungsblöcke in Fig. 6. Entsprechend werden im folgenden die Fig. 6 bis 11 gemeinsam erläutert. Dabei wird von zeitlichen Verläufen der Sensorsignale auf den Leitungen 24 ausgegangen, wie sie in den Fig. 2 bis 4 dargestellt sind.

In der Steuersignal-Erzeugungsstufe 48 nach Fig. 7 ist die Leitung 26 für das Signal mit der Information über den Sollwert der Phasenlage der Sensorsignale, d.h. mit der Information über den Phasenwinkel PHI, mit ersten Eingängen 56, 57, 58, 59 bzw. 60 eines ersten, zweiten, dritten, vierten bzw. fünften Komparator 61, 62, 63, 64 bzw. 65 verbunden. Die Information über den einzustellenden Phasenwinkel PHI wird dabei als digitales Signal auf der Leitung 26 übertragen. Je ein zweiter Eingang 66, 67, 68, 69 bzw. 70 der Komparatoren 61, 62, 63, 64 bzw. 65 ist mit einem Grenzwertgeber 71, 72, 73, 74 bzw. 75 verbunden. Jeder der Komparatoren 61 bis 65 weist einen ersten Ausgang 76, 77, 78, 79 bzw. 80 und einen zweiten Ausgang 81, 82, 83, 84 bzw. 85 auf.

Wie bereits im vorstehenden zu den Fig. 2 bis 4 erläutert, ist die Wahl des Ersatz-Sensorsignals zu jedem der Sensorsignale aus der Menge aller Sensorsignale davon abhängig, zwischen welchen der Flanken der Sensorsignale die (im Beispiel nach den Fig. 2 bis 4:) ansteigende Signalflanke des resultierenden Sensorsignals gemäß dem einzustellenden Phasenwinkel PHI zu liegen kommt. Um zunächst das entsprechende Intervall zwischen je zwei der Signalflanken der Sensorsignale für einen vorgegebenen Phasenwinkel PHI zu bestimmen, wird der über die Leitung 26 zugeführte Sollwert für den Phasenwinkel PHI mit den Phasenlagen der Signalflanken der Sensorsignale verglichen. Die Phasenlagen werden durch die Grenzwertgeber 71 bis 75 vorgegeben; der Vergleich wird in den Komparatoren 61 bis 65 durchgeführt. Dabei liefert der erste Grenzwertgeber 71 einen Grenzwert (in Form eines Phasenwinkels bzw. einer Phasenwinkel), der dem Zeitpunkt t2 im Diagramm nach Fig. 2 entspricht, wobei tl als Nulldurchgang der in dem ersten Strang 3 durch den Läufer 2 induzierten Spannung dl der Nullpunkt für die Festlegung der Phasenlagen bzw. Phasenwinkel und insbesondere auch für den Phasenwinkel PHI bezeichnet ist. Der erste Grenzwertgeber 71 liefert somit einen dem Phasenwinkel PHI in Fig. 2 entsprechenden Grenzwert; die weiteren Grenzwertgeber 72 bis 75 liefern um je einen Abstand zweier Signalflanken der Sensorsignale im Betrag erhöhte Grenzwerte, die den Phasenlagen der ausgehend vom Zeitpunkt t1 in Fig. 2 nacheinander durchlaufenen Signalflanken der Sensorsignale entsprechen. Beispielsweise betrage der Phasenwinkel PHI in Fig. 2-30° und die Signalflanken der Sensorsignale gemäß den Fig. 2a) bis c) seien in ihren Phasenlagen um 60° gegeneinander beabstandet. Der erste Grenzwertgeber 71 liefert dann einen Grenzwert von PHI = -30°. Der zweite Grenzwertgeber 72 liefert einen um den Abstand zweier Signalflanken der Sensorsignale, d.h. um 60°, in Richtung des Phasenwinkels PHI veränderten Wert. Im vorstehenden Zahlenbeispiel beträgt damit der vom zweiten Grenzwertgeber 72 abgegebene zweite Grenzwert -90°. Entsprechend liefert der dritte Grenzwertgeber 73 einen dritten Grenzwert von -150°, der vierte Grenzwertgeber 74 einen vierten Grenzwert von -210° und der fünfte Grenzwertgeber 75 einen fünften Grenzwert von -270°.

In den Komparatoren 61 bis 65 werden die den ersten Eingängen 56, 57, 58, 59 bzw. 60 zugeführten Signale mit den vom jeweiligen Grenzwertgeber 71, 72, 73, 74, 75 den zweiten Eingängen 66, 67, 68, 69 bzw. 70 zugeführten Grenzwerten verglichen. Das Ergebnis dieses Vergleichs erscheint als binäres Signal an den ersten bzw. zweiten Ausgängen 76 bis 80 bzw. 81 bis 85. Dabei liefert jeder Komparator an seinem zweiten Ausgang eine logische 1, wenn das Signal am ersten Eingang größer ist als der dem zweiten Eingang zugeführte Grenzwert. Im anderen Fall erscheint eine logische 1 am ersten Ausgang des Komparators. Der jeweils andere Ausgang des Komparators zeigt eine logische 0. Im vorstehenden Zahlenbeispiel bedeutet dies, daß bei einem einzustellenden Phasenwinkel PHI von -45°, der kleiner ist als der erste Grenzwert -30° des ersten Grenzwertgebers 71, der erste Komparator 61 an seinem ersten Ausgang 76 eine logische 1 und an seinem zweiten Ausgang eine logische 0 liefert. Die übrigen Komparatoren 62 bis 65, für die der Phasenwinkel PHI von -45° größer ist als die zugehörigen Grenzwerte von -90°, -150°, -210° und -270°, liefern an ihren ersten Ausgängen 77 bis 80 eine logische 0 und ihren zweiten Ausgängen 82 bis 85 eine logische 1.

Die Steuersignal-Erzeugungsstufe 48 nach Fig. 7 enthält weiterhin ein erstes, zweites, drittes und viertes UND-Gatter 86, 87, 88 bzw. 89. Diese UND-Gatter 86 bis 89 sind mit ihren ersten Eingängen 90, 91, 92 bzw. 93 an die ersten Ausgänge 76, 77, 78 bzw. 79 des ersten, zweiten, dritten bzw. vierten Komparators 61, 62, 63 bzw. 64 und mit ihren zweiten Eingängen 94 bis 97 an die zweiten Ausgänge 82, 83, 84 bzw. 85 des zweiten, dritten, vierten bzw. fünften Komparators 62, 63, 64 bzw. 65 angeschlossen. Die Steuersignal-Erzeugungsstufe 48 umfaßt schließlich drei ODER-Gatter 102, 103 bzw. 104. Ein erster Eingang 105 des ersten ODER-Gatters 102 ist mit einem Ausgang 100 des dritten UND-Gatters 88, ein erster Eingang 106 des zweiten ODER-Gatters 103 ist mit dem ersten Ausgang 80 des fünften Komparators 65 und erster Eingang 107 des dritten ODER-Gatters 104 ist mit einem Ausgang 101 des vierten UND-Gatters 89 verbunden. Entsprechend sind Verbindungen von einem zweiten Eingang 108 des ersten ODER-Gatters 102 an den zweiten Ausgang des ersten Komparators 61 von einem zweiten Eingang 109 des zweiten ODER-Gatters 103 an einen Ausgang 99 des zweiten UND-Gatters 87 und von einem zweiten Eingang 110 des dritten ODER-Gatters 104 an einen Ausgang 98 des ersten UND-Gatters 86 geführt. Ein Ausgang 111 des ersten ODER-Gatters 102 ist mit einem Anschluß für eine erste Steuersignalleitung 114 verbunden. In gleicher Weise ist ein Ausgang 112 des zweiten ODER-Gatters 103 mit einem Anschluß einer dritten Steuersignalleitung 116 und ein Ausgang 113 des dritten ODER-Gatters 104 mit einem Anschluß einer fünften Steuersignalleitung 118 verbunden. Die Ausgänge 98 und 100 des ersten bzw. dritten UND-Gatters 86 bzw. 88 sind mit Anschlüssen für eine zweite bzw. vierte Steuersignalleitung 115 bzw. 117 verbunden, und der erste Ausgang 80 des fünften Komparators 65 ist an einen Anschluß für eine sechste Steuersignalleitung 119 geführt.

Die Steuersignal-Erzeugungsstufe 48 liefert über die Steuersignalleitungen 114 bis 119 die Steuersignale, die die Information über die Auswahl einer der Sensorsignale als Ersatz-Sensorsignal zu je einem der Sensorsignale enthalten. Da diese Auswahl von einem Bereich zwischen zwei Grenzwerten zum nächsten wechselt, ist die von den Steuersignalen auf den Steuersignalleitungen 114 bis 119 bereitgestellte Information gleichbedeutend mit einer Information darüber, in welchen der Bereiche zwischen den Grenzwerten der einzustellende Phasenwinkel PHI fällt. Im vorliegenden Beispiel mit PHI = -45° erhält man auf der zweiten und der fünften Steuersignalleitung 115 und 118 eine logische 1, wohingegen die übrigen Steuersignalleitungen 114, 116, 117 und 119 eine logische 0 führen.

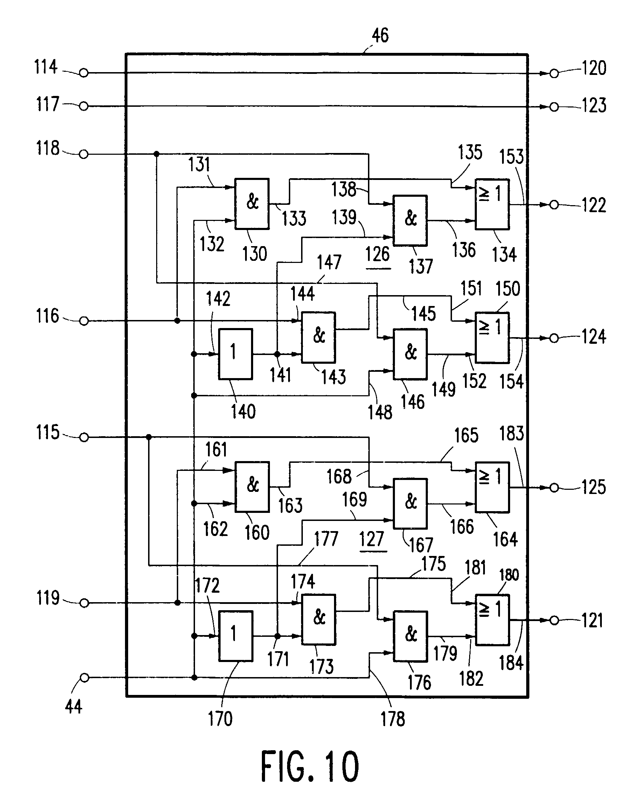

Fig. 10 zeigt ein Ausführungsbeispiel für eine Steuersignal-Modifikationsstufe 46. Die Steuersignal-Modifikationsstufe 46 weist sieben Eingänge auf, von denen sechs Eingänge mit je einer der Steuersignalleitungen 114 bis 119 und der siebte mit der Bewegungsrichtungs-Signalleitung 44 verbunden ist. Die Steuersignal-Modifikationsstufe 46 umfaßt weiterhin sechs Ausgänge, von denen je einer mit einer Leitung für ein bewegungsrichtungskorrigiertes Steuersignal verbunden ist. Die Steuersignal-Modifikationsstufe 46 schafft eine Verknüpfung zwischen den Steuersignalen auf den Steuersignalleitungen 114 bis 119 und den bewegungsrichtungskorrigierten Steuersignalen auf den dafür vorgesehenen Leitungen, die in Fig. 10 mit den Bezugszeichen 120 bis 125 versehen sind. Diese Verknüpfung wird durch das Bewegungsrichtungssignal von der Bewegungsrichtungs-Signalleitung 14 gesteuert. In der Steuersignal-Modifikationsstufe 46 ist die erste Steuersignalleitung 114 unmittelbar mit der ersten Leitung 120 für das erste bewegungsrichtungskorrigierte Steuersignal und die vierte Steuersignalleitung 117 unmittelbar mit der vierten Leitung für das vierte bewegungsrichtungskorrigierte Steuersignal verbunden. Die dritte und die fünfte Steuersignalleitung 116 und 118 sind über eine erste logische Schaltung 126 mit der dritten und der fünften Leitung 122 und 124 für das dritte bzw. fünfte bewegungsrichtungskorrigierte Steuersignal verbunden. Eine zur ersten logischen Schaltung 126 identische zweite logische Schaltung 127 verbindet die zweite und sechste Steuersignalleitung 115 und 119 mit der zweiten und sechsten Leitung 121 und 125 für das zweite bzw. sechste bewegungsrichtungskorrigierte Steuersignal. Durch die logischen Schaltungen 126 bzw. 127, die außerdem Anschluß an die Bewegungsrichtungs-Signalleitung 44 haben, kann je nach Wert des Bewegungsrichtungssignals die Verknüpfung für die dritte und fünfte Steuersignalleitung 116 und 118 mit der dritten bzw. fünften Leitung 122 bzw. 124 und entsprechend die Verknüpfung zwischen der zweiten und der sechsten Steuersignalleitung 115 und 119 mit der zweiten und der sechsten Leitung 121 bzw. 125 vertauscht werden.

Der Aufbau der logischen Schaltungen 126, 127 wird im folgenden am Beispiel der ersten logischen Schaltung 126 beschrieben. Die Bezugszeichen für die Elemente zu der identisch aufgebauten zweiten logischen Schaltung 127 sind dazu in Klammern beigefügt.

Ein erstes UND-Gatter 130 (160) der ersten (zweiten) logischen Schaltung 126 (127) ist mit seinem ersten Eingang 131 (161) mit der dritten (sechsten) Steuersignalleitung 116 (119) und mit seinem zweiten Eingang 132 (162) mit der Bewegungsrichtungs-Signalleitung 44 verbunden. Ein Ausgang 133 (163) des ersten UND-Gatters 130 (160) ist mit einem ersten Eingang 135 (165) eines ersten ODER-Gatters 134 (164) der ersten (zweiten) logischen Schaltung 126 (127) verbunden. Ein zweiter Eingang 136 (166) bildet zugleich einen Ausgang eines zweiten UND-Gatters 137 (167), das mit seinem ersten Eingang 138 (168) an die fünfte (zweite) Steuersignalleitung und mit seinem zweiten Eingang 139 (169) an einen Ausgang 141 (171) eines Inverters 140 (170) angeschlossen ist. Mit seinem Eingang 142 (172) ist der Inverter 140 (170) mit der Bewegungsrichtungs-Signalleitung 44 verbunden. Der Ausgang 141 (171) des Inverters 140 (170) bildet zugleich einen ersten Eingang eines dritten UND-Gatters 143 (173), dessen zweiter Eingang 144 (174) mit der dritten (sechsten) Steuersignalleitung 116 (119) verbunden ist.

Ein viertes UND-Gatter 146 (176) ist mit seinem ersten Eingang 147 (177) an die fünfte (zweite) Steuersignalleitung 118 (115) geführt. Ein zweiter Eingang 148 (178) des vierten UND-Gatters 146 (176) ist mit der Bewegungsrichtungs-Signalleitung 44 verbunden.

Das dritte UND-Gatter 143 (173) und das vierte UND-Gatter 146 (176) sind mit ihren Ausgängen 145 (175) bzw. 149 (179) mit einem ersten Eingang 151 (181) bzw. einem zweiten Eingang 152 (182) eines zweiten ODER-Gatters 150 (180) verbunden. Ein Ausgang 153 (183) des ersten ODER-Gatters 134 (164) ist mit der dritten (sechsten) Leitung 122 (125) für das dritte (sechste) bewegungsrichtungskorrigierte Steuersignal verbunden. Ein Ausgang 154 (184) des zweiten ODER-Gatters 150 (180) ist an die fünfte (zweite) Leitung 124 (121) für das fünfte (zweite) bewegungsrichtungskorrigierte Steuersignal geführt.

Bei dieser Ausbildung der logischen Schaltungen 126, 127 wird die zweite, dritte, fünfte bzw. sechste Steuersignalleitung 115, 116, 118 bzw. 119 mit der zweiten, dritten, fünften bzw. sechsten Leitung 121, 122, 124 bzw. 125 für das entsprechende bewegungsrichtungskorrigierte Steuersignal verbunden, wenn als Bewegungsrichtungssignal auf der Bewegungsrichtungs-Signalleitung 44 eine logische 1 anliegt. Wird dort statt dessen eine logische 0 zugeführt, stellen die logischen Schaltungen 126, 127 der Steuersignal-Modifikationsstufe 46 die folgenden Verbindungen her: Zweite Steuersignalleitung 115 mit sechster Leitung 125, sechste Steuersignalleitung 119 mit zweiter Leitung 121, dritte Steuersignalleitung 116 mit fünfter Leitung 124 und fünfte Steuersignalleitung 118 mit dritter Leitung 122.

Im Zahlenbeispiel für einen Phasenwinkel PHI von -45° erhält man bei einer logischen 1 für das Bewegungsrichtungssignal auf der zweiten Leitung 121 und der fünften Leitung 124 eine logische 1, während für eine logische 0 als Bewegungsrichtungssignal auf der dritten Leitung 122 und der sechsten Leitung 125 eine logische 1 erscheint. Die übrigen Signale auf den Leitungen 120 bis 125 entsprechen jeweils dem Pegel der logischen 0.

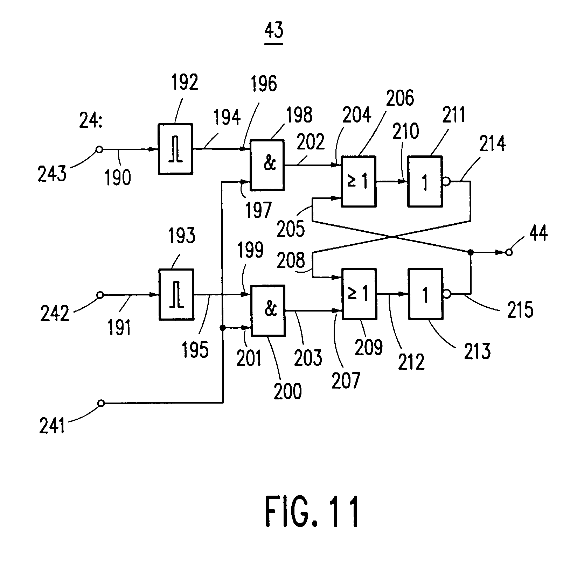

Das Bewegungsrichtungssignal auf der Bewegungsrichtungs-Signalleitung 44 wird von einer Bewegungsrichtungs-Detektionsstufe 43 aus den Sensorsignalen erzeugt, die von der Positionsgeberanordnung 23 über die Leitung 24 geführt werden. Ein Ausführungsbeispiel für eine derartige Bewegungsrichtungs-Detektionsstufe 43 ist in Fig. 11 dargestellt. Darin umfaßt die Leitung 24 drei Leiter, von denen ein erster das zum ersten Strang 3 gehörige Sensorsignal führt und dem Bezugszeichen 241 versehen ist. Der zweite Leiter 242 führt das dem zweiten Strang 4 zugehörige Sensorsignal, und der dritte Leiter 243 dient zum Zuführen des dem dritten Strang 5 zugehörigen, dritten Sensorsignals. Die Sensorsignale weisen dabei bevorzugt die zeitlichen Verläufe gemäß den Fig. 2a) bis c) auf. Der zweite und der dritte Leiter 242, 243 sind mit je einem Eingang 190 bzw. 191 einer ersten bzw. zweiten monostabilen Kippstufe 192 bzw. 193 verbunden. Die monostabilen Kippstufen 192, 193 sind derart ausgebildet, daß sie beim Auftreten einer ansteigenden Signalflanke im zweiten bzw. im dritten Sensorsignal (gemäß Fig. 2b) bzw. Fig. 2c)) auf dem zweiten bzw. dem dritten Leiter 242 bzw. 243 einen gegenüber dem zeitlichen Abstand zweier aufeinanderfolgender Signalflanken in den Sensorsignalen kurzen Impuls eines Signal von logisch 0 nach logisch 1 abgeben. Diese Impulse werden vom Ausgang 194 der ersten monostabilen Kippstufe 192 an einen ersten Eingang 196 eines ersten UND-Gatters 198 der Bewegungsrichtungs-Detektionsstufe 43 geführt; vom Ausgang 195 der zweiten monostabilen Kippstufe 193 werden die dort abgegebenen Impulse einem ersten Eingang 199 eines zweiten UND-Gatters 200 der Bewegungsrichtungs-Detektionsstufe 43 zugeleitet. Ein zweiter Eingang 197 des ersten UND-Gatters 198 und ein zweiter Eingang 201 des zweiten UND-Gatters 200 sind gemeinsam mit dem ersten Leiter zum Zuführen des ersten Sensorsignals (zugehörig zum ersten Strang 3; vorzugsweiser Verlauf gemäß Fig. 2a)) verbunden.

Die UND-Gatter 198, 200 sind mit ihren Ausgängen 202 bzw. 203 mit Eingängen einer bistabilen Kippschaltung verbunden. Der erste dieser Eingänge wird durch einen ersten Eingang 204 eines ersten ODER-Gatters 206 der Bewegungsrichtungs-Detektionsstufe 43, der zweite dieser Eingänge durch einen ersten Eingang 207 eines zweiten ODER-Gatters 209 der Bewegungsrichtungs-Detektionsstufe 43 gebildet. Ein Ausgang 210 des ersten ODER-Gatters 206 bildet zugleich einen Eingang eines ersten Inverters 211 der Bewegungsrichtungs-Detektionsstufe 43. Entsprechend bildet ein Ausgang 212 des zweiten ODER-Gatters 209 einen Eingang eines zweiten Inverters 213 der Bewegungsrichtungs-Detektionsstufe 43. Der erste Inverter 211 ist mit seinem Ausgang 214 an einen zweiten Eingang 208 des zweiten ODER-Gatters 209 angeschlossen, und ein Ausgang 215 des zweiten Inverters 213 ist mit einem zweiten Eingang 205 des ersten ODER-Gatters 206 verbunden.

Diese an sich bekannte bistabile Kippschaltung, deren Ausgang vom Ausgang 215 des zweiten Inverters 213 gebildet wird, der mit der Bewegungsrichtungs-Signalleitung 44 verbunden ist, schaltet durch einen Impuls am ersten Eingang 204 des ersten ODER-Gatters 206 in einen ersten Schaltzustand um, der solange beibehalten wird, bis am ersten Eingang 207 des zweiten ODER-Gatters 209 ein gleichartiger Impuls auftritt. Im genannten ersten Schaltzustand nimmt das Bewegungsrichtungssignal auf der Bewegungsrichtungs-Signalleitung 44 einen logischen Pegel 1, im genannten zweiten Schaltzustand der bistabilen Kippschaltung einen logischen Wert 0 an. Der in der Fig. 2a) bis c) für den zeitlichen Verlauf der Sensorsignale vorausgesetzten Bewegungsrichtung fallen die ansteigenden Signalflanken des zweiten Sensorsignals gemäß Fig. 2b) und damit die Impulse am Ausgang 195 der zweiten monostabilen Kippstufe 193 stets mit einem logisch 0 entsprechenden Pegel des ersten Sensorsignals gemäß Fig. 2a) zusammen, wohingegen beim Auftreten der Impulse von der ersten monostabilen Kippstufe 192 (durch ansteigende Signalflanken im dritten Sensorsignal gemäß Fig. 2c)) das erste Sensorsignal nach Fig. 2a) stets einen Wert logisch 1 annimmt. Entsprechend wird das erste UND-Gatter 198 für die Impulse von der ersten monostabilen Kippstufe 192 durchlässig geschaltet, wohingegen das zweite UND-Gatter 200 für die Impulse von der zweiten monostabilen Kippstufe 193 sperrt. Die anschließende bistabile Kippschaltung 206, 209, 211, 213 schaltet dann das Bewegungsrichtungssignal auf logisch 1 um. Für die entgegengesetzte Bewegungsrichtung sind die zeitlichen Verläufe des zweiten und des dritten Sensorsignals gemäß Fig. 2b) und c) vertauscht. Es werden dann nur die Impulse von der zweiten monostabilen Kippstufe 193 auf die bistabile Kippstufe 206, 209, 211, 213 gegeben, so daß das Bewegungsrichtungssignal auf logisch 0 umschaltet.

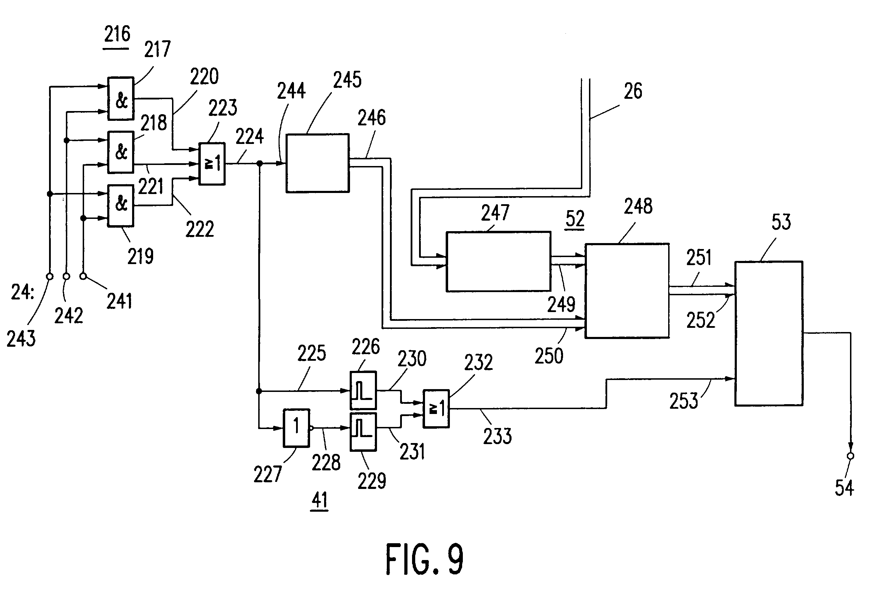

In Fig. 9 sind die Elemente des Schaltungsblocks der Fig. 6 dargestellt, die zur Erzeugung des Ladesignals auf der Ladesignalleitung 54 aus den Sensorsignalen von der Leitung 24 und dem Sollwert der Phasenlage der Sensorsignale bzw. dem Phasenwinkel PHI auf der Leitung 26 dienen. Eine Eingangsstufe 216 dient der Bildung eines Rechtecksignals mit der dreifachen Frequenz der Sensorsignale bzw. der Grundschwingung d2 der Strangspannung an den Strängen 3, 4 bzw. 5 des Elektromotors 1. Dazu enthält die Eingangsstufe 216 drei UND-Gatter 217, 218 und 219. Von diesen ist ein erstes UND-Gatter 217 mit seinen Eingängen mit dem zweiten bzw. dem dritten Leiter 242 bzw. 243 der Leitung 24 verbunden. Entsprechend ist das zweite UND-Gatter 218 mit seinen Eingängen mit dem ersten Leiter 241 bzw. dem zweiten Leiter 242 und das dritte UND-Gatter 219 mit seinen Eingängen mit dem ersten Leiter 241 bzw. dem dritten Leiter 243 verbunden. Ausgänge 220, 221 bzw. 222 der UND-Gatter 217, 218 bzw. 219 bilden drei Eingänge eines ODER-Gatters 223, an dessen Ausgang 224 das genannte Rechtecksignal mit der dreifachen Frequenz der Grundschwingung d2 der Strangspannung (vgl. Fig. 2d)) abgegriffen werden kann. Dieses Rechtecksignal weist somit zu jeder Signalflanke der drei Sensorsignale eine Signalflanke auf.

Der Schaltungsblock nach Fig. 9 umfaßt weiterhin eine Flankendetektionsstufe 41, der das obige Rechtecksignal vom Ausgang 224 des ODER-Gatters 223 zugeführt wird. Dazu ist dieser Ausgang 224 unmittelbar mit einem Eingang 225 einer von der Flankendetektionsstufe 41 umfaßten, ersten monostabilen Kippstufe 226 und über einen Inverter 227 mit einem Eingang 228 einer zweiten monostabilen Kippstufe 229 verbunden. Die beiden monostabilen Kippstufen 226, 229 der Flankendetektionsstufe 41 entsprechen in ihrer Funktion den monostabilen Kippstufen 192, 193 der Bewegungsrichtungs-Detektionsstufe 43 gemäß Fig. 11. Somit entsteht am Ausgang 230 der ersten monostabilen Kippstufe 226 der Flankendetektionsstufe 41 mit jeder ansteigenden Signalflanke im Rechtecksignal vom Ausgang 224 ein kurzer Impuls zu logisch 1 hin, während die zweite monostabile Kippstufe 229 an ihrem Ausgang 231 einen solchen Impuls mit jeder abfallenden Signalflanke des Rechtecksignals vom Ausgang 224 abgibt. Die Ausgänge 230, 231 der monostabilen Kippstufen 226, 229 bilden zugleich Eingänge eines ODER-Gatters 233 der Flankendetektionsstufe 41. Am Ausgang 233 wird dann ein impulsförmiges Signal abgegeben, welches zu jeder der Signalflanken der Sensorsignale einen kurzen Impuls zu logisch 1 hin enthält und als Triggersignal für die Ladesignal-Erzeugungsstufe 53 dient.

Mit dem Ausgang 224 des ODER-Gatters 223 der Eingangsstufe 216 ist außerdem ein Eingang 244 einer Geschwindigkeits-Meßstufe 245 verbunden. Wahlweise kann der Eingang 244 auch mit dem Ausgang 233 des ODER-Gatters 233 der Flankendetektionsstufe 41 verbunden sein. In beiden Fällen erhält die Geschwindigkeits-Meßstufe 245 ein Signal mit einer Information über den zeitlichen Abstand zweier Flanken der Sensorsignale. Die Geschwindigkeits-Meßstufe 245 vergleicht diesen Abstand laufend mit einem Zeitnormal und leitet aus diesem Vergleich ein die Bewegungsgeschwindigkeit darstellendes Geschwindigkeitssignal ab, welches an einem Ausgang 246 der Geschwindkeits-Meßstufe 245 abgegeben wird. Als Zeitnormal kann beispielsweise ein frequenzstabiles Taktsignal mit einer Frequenz dienen, die groß gegenüber der höchstmöglichen Frequenz des Rechtecksignals vom Ausgang 224 ist. Von der Geschwindigkeits-Meßstufe 245 können dann die Periodendauern dieses Taktsignals zwischen zwei Flanken des Rechtecksignals (bzw. zwei Impulsen des Triggersignals am Ausgang 233) gezählt werden. Die so ermittelte Anzahl von Periodendauern des Taktsignals als Maß für den zeitlichen Abstand zweier Flanken des Rechtecksignals ist umgekehrt proportional zur Bewegungsgeschwindigkeit des Läufers 2. Das Geschwindigkeitssignal wird bevorzugt als (mehrstelliges) binäres Signal dargestellt.

Durch die Geschwindigkeits-Meßstufe 245 gemäß Fig. 9 werden in diesem Ausführungsbeispiel die Aufgaben des Tachogenerators aus den Fig. 1 und 5 übernommen. Bei einer Ausbildung gemäß Fig. 9 kann der erfindungsgemäße elektrische Antrieb somit ohne einen gesonderten Tachogenerator ausgebildet werden.

Der Schaltungsblock von Fig. 9 umfaßt weiterhin eine Verzögerungszeit-Bestimmungsstufe 52. Diese setzt sich zusammen aus einer Rechenstufe 247 und einer zweiten Rechenstufe 248. Der ersten Rechenstufe 247 wird über die Leitung 26 das Signal mit der Information über den Sollwert der Phasenlage der Phasenlage der Sensorsignale, d.h. über den Sollwert des Phasenwinkels PHI, zugeführt. Dieser Sollwert wird in der ersten Rechenstufe 247 einer Restklassendivision unterzogen, bei der der Divisor dem Phasenwinkel zwischen zwei aufeinanderfolgenden Signalflanken der Sensorsignale bzw. des Rechtecksignals am Ausgang 224 des ODER-Gatters 223 bzw. dem Abstand zweier aufeianderfolgender Impulse des Triggersignals am Ausgang 233 des ODER-Gatters 232 entspricht. Am Ausgang 249 der ersten Rechenstufe 247 wird dann ein digitales Signal abgegeben, welches dem Restwert dieser Restklassendivision des Sollwerts für den Phasenwinkel PHI entspricht. Im vorliegenden Beispiel wird in der ersten Rechenstufe 247 eine Restklassendivision modulo 60° durchgeführt. Der sich ergebende Restwert dieser Restklassendivision wird dann als Information über die in der Phasenstellstufe 25 vorzunehmende Verzögerung des Ersatz-Sensorsignals bzw. des bewegungsrichtungskorrigierten Ersatz-Sensorsignals weiter verwendet, wohingegen die bei der Restklassendivision entfallenden, ganzzahligen Vielfachen von 60° aus dem Sollwert für den Phasenwinkel PHI durch die entsprechende Auswahl eines der Sensorsignale als Ersatz-Sensorsignal bzw. bewegungsrichtungskorrigiertes Ersatz-Sensorsignal Berücksichtigung finden.

Über den Ausgang 249 der ersten Rechenstufe 247, der gleichzeitig einen ersten Eingang der zweiten Rechenstufe 248 darstellt, wird das dem Restwert der Restklassendivision in der ersten Rechenstufe 247 entsprechende Signal der zweiten Rechenstufe 248 zugeführt. Über einen zweiten Eingang 250 erhält die zweite Rechenstufe 248 vom Ausgang 246 der Geschwindigkeits-Meßstufe 245 das (digitale) Geschwindigkeitssignal zugeleitet. In der zweiten Rechenstufe 248 erfolgt eine Verarbeitung der zugeführten Signale in der Weise, daß der Restwert der Restklassendivision durch die Bewegungsgeschwindigkeit des Läufers 2 dividiert wird, bzw. das der Bewegungsgeschwindigkeit umgekehrt proportionale Geschwindigkeitssignal wird mit dem Restwert multipliziert. Daraus ergibt sich am Ausgang 251 der zweiten Rechenstufe 248 unmittelbar ein (digitales) Signal, welches den aktuellen Wert für die Verzögerungszeit tv repräsentiert.

Dem Ausgang 251 der zweiten Rechenstufe 248 der Verzögerungszeit-Bestimmungsstufe 52 schließt sich ein Voreinstelleingang 252 der Ladesignal-Erzeugungsstufe 53 an. Die Ladesignal-Erzeugungsstufe 53 weist weiterhin einen Triggersignaleingang 253 auf, der mit dem Ausgang 233 des ODER-Gatters 232 der Flankendetektionsstufe 41 verbunden ist. Die Ladesignal-Erzeugungsstufe 53 ist vorzugsweise als sogenannte Timer-Schaltung ausgebildet, die mit vorzugsweise demselben Taktsignal betrieben wird, welches auch als Zeitnormal in der Geschwindigkeits-Meßstufe 245 Verwendung findet. Die Ladesignal-Erzeugungsstufe 53 wird in jeder Periode des Triggersignals, und zwar ausgelöst durch die vordere Flanke der Impulse dieses Triggersignals auf den über den Voreinstelleingang 252 zugeführten Wert der Verzögerungszeit tv voreingestellt. Anschließend wird nach Maßgabe des genannten Taktsignals ausgehend von dem voreingestellten Wert abwärts auf 0 zurückgezählt. Beim Erreichen des Zählwertes 0 ist dann vom Beginn des letzten Impulses des Triggersignals an gerade die erwünschte Verzögerungszeit tv verstrichen. Beim Erreichen des Zählwertes 0 wird daher von der Ladesignal-Erzeugungsstufe 53 auf der Ladesignalleitung 54 das Ladesignal in Form eines gegenüber dem zeitlichen Abstand zweier aufeinanderfolgender Impulse des Triggersignals kurzen Impulses abgegeben.

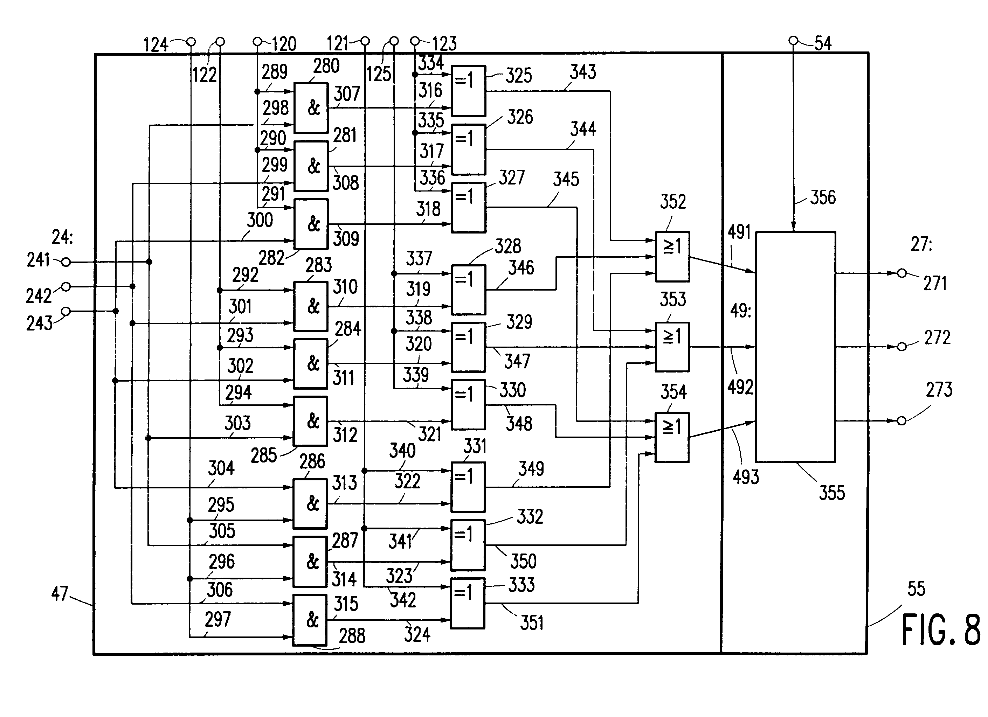

In Fig. 8 ist ein detailliertes, logisches Schaltbild eines Ausführungsbeispiels der Sensorsignal-Zuordnungsstufe 47 sowie ein Ausführungsbeispiel für die Sensorsignal-Ausgabestufe 55 dargestellt. Die Sensorsignal-Zuordnungsstufe 47 enthält insgesamt neun UND-Gatter 280 bis 288, die in drei Gruppen 280 bis 282, 283 bis 285 und 286 bis 288 unterteilt sind. Die UND-Gatter 280 bis 282 der ersten Gruppe sind mit ersten Eingängen 289, 290 bzw. 291 mit der ersten Leitung 120 für das erste bewegungsrichtungskorrigierte Steuersignal verbunden. Erste Eingänge 292, 293 bzw. 294 der zweiten Gruppe 283 bis 285 der UND-Gatter sind an die dritte Leitung 122 für das dritte bewegungsrichtungskorrigierte Steuersignal angeschlossen, und erste Eingänge 295 296 bzw. 297 der dritten Gruppe 286 bis 288 der UND-Gatter sind an die fünfte Leitung 124 für das fünfte bewegungsrichtungskorrigierte Steuersignal geführt.

In jeder der Gruppen 280 bis 282, 283 bis 285 und 286 bis 288 der UND-Gatter ist je eines der UND-Gatter mit je einem der Leiter der Leitung 24 für die Sensorsignale verbunden. Im einzelnen sind die zweiten Anschlüsse 298, 303 und 305 des ersten, sechsten bzw. achten UND-Gatters 280, 285 bzw. 287 mit dem ersten Leiter 241, die zweiten Eingänge 299, 301 bzw. 306 des zweiten, vierten bzw. neunten UND-Gatters 281, 283 bzw. 288 mit dem zweiten Leiter 242 und die zweiten Eingänge 300, 302 und 304 des dritten, fünften bzw. siebten UND-Gatters 282, 284 bzw. 286 mit dem dritten Leiter 243 verbunden.

Die UND-Gatter 280 bis 288 sind mit ihren Ausgängen 307 bis 315 mit ersten Eingängen 316 bis 324 von insgesamt neun gesteuerten Invertern 325 bis 333 verbunden, von denen je einer einem der UND-Gatter 280 bis 288 zugeordnet ist und die dementsprechend ebenfalls in einer ersten, zweiten und dritten Gruppe 325 bis 327, 328 bis 330 und 331 bis 333 angeordnet sind. Je ein zweiter Eingang 334 bis 336 der ersten Gruppe gesteuerter Inverter 325 bis 327 ist mit der vierten Leitung 123 für das vierte bewegungsrichtungskorrigierte Steuersignal verbunden. Entsprechend ist je ein zweiter Eingang 337, 338, 339 der zweiten Gruppe 328, 329, 330 der gesteuerten Inverter an die sechste Leitung 125 für das sechste bewegungsrichtungskorrigierte Steuersignal und ist je ein zweiter Eingang 340, 341, 342 der dritten Gruppe 331, 332, 333 der gesteuerten Inverter an die zweite Leitung 121 für das zweite bewegungsrichtungskorrigierte Steuersignal angeschlossen.

Die gesteuerten Inverter 325 bis 333, die auch als Antivalenzglieder bezeichnet werden können, liefern an ihren Ausgängen 343 bis 351 jeweils das an ihrem ersten Eingang 316 bis 324 anliegende Signal, wenn ihrem zweiten Eingang 334 bis 342 eine logische 0 zugeführt wird. Wird dagegen dem zweiten Eingang 334 bis 342 eine logische 1 zugeleitet, erscheint am Ausgang 343 bis 351 das Inverse des Signals am ersten Eingang 316 bis 324.

Die Ausgänge 343 bis 345 der ersten Gruppe 325 bis 327 der gesteuerten Inverter bilden jeder einen ersten Eingang eines ersten, zweiten bzw. dritten ODER-Gatters 352, 353 bzw. 354. In gleicher Weise bilden die Ausgänge 346 bis 348 der zweiten Gruppe gesteuerter Inverter 328 bis 330 je einen zweiten Eingang der drei ODER-Gatter 352 bis 354, und die Ausgänge 349 bis 351 der dritten Gruppe gesteuerter Inverter 331 bis 333 bilden je einen dritten Eingang zu jedem der drei ODER-Gatter 352 bis 354. Somit übernehmen die ODER-Gatter 352 bis 354 die Funktion einer Verzweigung der Ausgänge 343 bis 345 bzw. 346 bis 348 bzw. 349 bis 351 auf einen ersten, zweiten und dritten Leiter der Verbindungsleitungen 49 für die bewegungsrichtungskorrigierten Ersatz-Sensorsignale, wobei diese mit den Bezugszeichen 491, 492 bzw. 493 bezeichneten Leiter Ausgänge der ODER-Gatter 352, 353 bzw. 354 darstellen.

Die Ableitung der bewegungsrichtungskorrigierten Ersatz-Sensorsignale auf den Leitungen 49 aus den Sensorsignalen auf der Leitung 24 in der Sensorsignal-Zuordnungsstufe 47 erfolgt in zwei Schritten. Im ersten Schritt werden in den UND-Gattern 280 bis 288 - gesteuert durch das erste, dritte und fünfte bewegungsrichtungskorrigierte Steuersignal - die für den jeweils einzustellenden Phasenwinkel PHI die erforderlichen Zuordnungen der einzelnen Sensorsignale zu den Signalwegen für die bewegungsrichtungskorrigierten Ersatz-Sensorsignale vorgenommen. Für diese Zuordnungen gibt es im beschriebenen Beispiel drei Möglichkeiten: Das erste bewegungsrichtungskorrigierte Sensorsignal auf dem ersten Leiter 491 kann aus dem ersten Sensorsignal vom Leiter 241, dem zweiten Sensorsignal vom Leiter 242 oder aus dem dritten Sensorsignal vom Leiter 243 abgeleitet werden. Für diese drei Möglichkeiten resultieren feste Zuordnungen auch für die übrigen bewegungsrichtungskorrigierten Ersatz-Sensorsignale auf den Leitern 492 und 493. Für jede der genannten Möglichkeiten der Zuordnung ist eine der Gruppen der UND-Gatter 280 bis 282 bzw. 283 bis 285 bzw. 286 bis 288 vorgesehen. Da jeweils nur eine der drei Möglichkeiten zutrifft, nimmt auch nur eines der drei bewegungsrichtungskorrigierten Steuersignale auf den Leitungen 120, 122 oder 124 einen Wert entsprechend logisch 1 an. Damit ist nur jeweils eine Gruppe von UND-Gattern durchlässig, die übrigen sperren.

Von der durchlässig geschalteten Gruppe von UND-Gattern 280 bis 282, 283 bis 285 bzw. 286 bis 288 gelangen die entsprechend vertauschten Sensorsignale auf die zugeordneten Gruppen gesteuerter Inverter 325 bis 327, 328 bis 330 bzw. 331 bis 333. Je nach dem Wert für den Phasenwinkel PHI müssen die Sensorsignale wie beschrieben invertiert oder nicht invertiert werden. Dies wird durch das zweite, vierte bzw. sechste bewegungsrichtungskorrigierte Steuersignal auf der zweiten, vierten bzw. sechsten Leitung 121, 123 bzw. 125 erreicht. Die bewegungsrichtungskorrigierten Steuersignale zu den Gruppen gesteuerter Inverter, für die jeweils die zugehörigen Gruppen von UND-Gattern gesperrt sind, werden von der Steuersignal-Erzeugungsstufe 48 und der Steuersignal-Modifikationsstufe 46 auf den Wert logisch 0 gesetzt. Somit liefern diese gesteuerten Inverter an ihren Ausgängen lediglich einen Wert logisch 0, der die ODER-Gatter 352 bis 354 nicht beeinflußt. Für die Gruppe von UND-Gattern, die durch das entsprechende bewegungsrichtungskorrigierte Steuersignal durchgängig geschaltet ist, können in der nachgeschalteten Gruppe gesteuerter Inverter die Sensorsignale wahlweise invertiert oder nicht invertiert durchgelassen werden. Ohne weitere Veränderung gelangen diese Signale über die ODER-Gatter 352 bis 354 als bewegungsrichtungskorrigierte Ersatz-Sensorsignale auf die Leiter 491 bis 493.

Die Sensorsignal-Ausgabestufe 55 nach Fig. 8 enthält einen Ausgabespeicher 355 für die drei binären bewegungsrichtungskorrigierten Ersatz-Sensorsignale. Dabei bilden die Leiter 491 bis 493 die Eingänge für die zu speichernden, binären bewegungsrichtungskorrigierten Ersatz-Sensorsignale. Ein erster, zweiter bzw. dritter Leiter 271, 272 bzw. 273 der Leitung 27 für die resultierenden Sensorsignale bildet einen zweiten bzw. dritten Ausgang des Ausgabespeichers 355 für die darin gespeicherten Signale. Ein Ladesignaleingang 356 des Ausgabespeichers 355 ist mit der Ladesignalleitung 54 verbunden.

Unter Vernachlässigung von Gatterlaufzeiten stehen die bewegungsrichtungskorrigierten Ersatz-Sensorsignale auf den Leitungen 49 zeitgleich mit den Sensorsignalen auf der Leitung 24 zur Verfügung. Der Ausgabespeicher 355 ist derart ausgebildet, daß beim Auftreten eines Impulses im Ladesignal auf der Ladesignalleitung 54 die zu diesem Zeitpunkt an den Eingängen, d.h. auf den Leitern 491 bis 493, verfügbaren Signalwerte in den Ausgabespeicher 355 geladen und an dessen Ausgängen 271 bis 273 so lange unverändert gehalten werden, bis durch einen nachfolgenden Impuls des Ladesignals die dann aktuellen Signalwerte an den Leitern 491 bis 493 in den Ausgabespeicher 355 gelangen. Zwischenzeitliche Änderungen der Signalwerte auf den Leitern 491 bis 493 beeinflussen die Signalwerte auf der Leitung 27 nicht. In dieser Weise werden sehr einfach die resultierenden Sensorsignale gewonnen, die gegenüber den bewegungsrichtungskorrigierten Ersatz-Sensorsignalen um die Verzögerungszeit tv verzögert sind.

Die Fig. 6 zeigt die Zusammenfügung der in den Fig. 7 bis 11 dargestellten Schaltungsblöcke. Gegenüber der Darstellung des Ausführungsbeispiels nach Fig. 5 ist hier die Verbindung durch die Steuersignalleitungen 114 bis 119 und die Verbindung der Leitungen 120 bis 125 für die bewegungsrichtungskorrigierten Steuersignale an die Stelle der dortigen Verbindungen 50 für die Steuersignale und 51 für die Information über die Bewegungsrichtungskorrektur getreten. Diese Variation in dem Teil ändert jedoch nichts am Prinzip des erfindungsgemäßen elektrischen Antriebs.

## Patentansprüche

1. Elektrischer Antrieb mit
- einem fremderregten Elektromotor (1), der einen Ständer mit in mehreren Strängen angeordneten Wicklungen (3, 4, 5) und einen Läufer (2) aufweist,
- einer elektronischen Kommutierungsanordnung (6) zum Beaufschlagen der Stränge des Elektromotors mit elektrischer Energie,
- einer Positionsgeberanordnung (23) zum Abgeben je eines Sensorsignals für jeden Strang des Elektromotors in Abhängigkeit von einer augenblicklichen Position des Läufers gegenüber dem Ständer, wobei jedes der Sensorsignale eine vorgebbare Phasenlage bezüglich der Position des Läufers einnimmt,
- einer Phasenstellstufe (25) zum Hinzufügen einer für alle Sensorsignale gleichmäßigen, von wenigstens der Bewegungsgeschwindigkeit des Läufers abhängigen Phasenverschiebung zur Phasenlage der Sensorsignale, wodurch resultierende Sensorsignale gewonnen werden,
- einem Kurvenformgenerator (28), dem die resultierenden Sensorsignale zuleitbar sind und in dem aus jedem der resultierenden Sensorsignale für den zugehörigen Strang Kommutierungssignale abgeleitet werden zum in der Kommutierungsanordnung vorzunehmenden Steuern des zeitlichen Verlaufs und der Amplitude der dem Elektromotor zuzuführenden elektrischen Energie und
- einer Regelstufe (36) zum Stellen der Amplitude und der Phasenverschiebung der Zufuhr elektrischer Energie zum Elektromotor in Abhängigkeit von wenigstens der Bewegungsgeschwindigkeit des Läufers,
dadurch gekennzeichnet daß die Phasenstellstufe umfaßt:
- eine Steuersignal-Erzeugungsstufe (48), in der für den von der Regelstufe aktuell vorgegebenen Wert der Phasenverschiebung zu jedem einzelnen der Sensorsignale aus der Menge aller Sensorsignale dasjenige als Ersatz-Sensorsignal ausgewählt wird, welches unmittelbar oder invertiert durch geringstmögliche Verzögerung in die Phasenlage des aus dem genannten, einzelnen Sensorsignal abzuleitenden resultierenden Sensorsignals überführbar ist, und von der Steuersignale abgebbar sind, die eine Information über diese Auswahl enthalten,
- eine Sensorsignal-Zuordnungsstufe (47), der die Sensorsignale von der Positionsgeberanordnung zuführbar sind und in der nach Maßgabe der Steuersignale aus den Sensorsignalen die Ersatz-Sensorsignale abgeleitet und bereitgestellt werden,
- eine Verzögerungszeit-Bestimmungsstufe (52) zum Bestimmen einer der Verzögerung zwischen jedem der Ersatz-Sensorsignale und dem daraus jeweils abzuleitenden resultierenden Sensorsignal entsprechenden Zeitspanne (Verzögerungszeit) aus dem aktuell vorgegebenen Wert der Phasenverschiebung der Bewegungsgeschwindigkeit des Läufers sowie dem Abstand der Phasenlagen der Sensorsignale entlang einer die Position des Läufers beschreibenden Bewegungskoordinate,
- eine Sensorsignal-Ausgabestufe (55), der die Ersatz-Sensorsignale zuführbar sind und in der die resultierenden Sensorsignale, ausgelöst durch ein Ladesignal, speicherbar und von ihr abgebbar sind, sowie
- eine Ladesignal-Erzeugungsstufe (53), in der zu jeder Änderung des Wertes eines der Sensorsignale bzw. der Ersatz-Sensorsignale das Ladesignal neu erzeugt und gegenüber dieser Änderung um die in der Verzögerungszeit-Bestimmungsstufe bestimmte Verzögerungszeit verzögert der Sensorsignal-Ausgabestufe zugeführt werden kann.

2. Elektrischer Antrieb nach Anspruch 1, gekennzeichnet durch
eine Steuersignal-Modifikationsstuffe (46), der die Steuersignale von der Steuersignal-Erzeugungsstufe sowie ein Bewegungsrichtungssignal zuleitbar sind und von der die Steuersignale, gesteuert durch das Bewegungsrichtungssignal, in bewegungsrichtungskorrigierte Steuersignale umgewandelt werden können, durch die eine für die jeweils vorliegende Bewegungsrichtung des Läufers korrekte Ableitung der Ersatz-Sensorsignale aus den Sensorsignalen vornehmbar ist.

3. Elektrischer Antrieb nach Anspruch 2, gekennzeichnet durch
eine Bewegungsrichtungs-Detektionsstufe (43) zum Detektieren der aktuellen Bewegungsrichtung des Läufers und zum Abgeben des demgemäß ausgebildeten Bewegungsrichtungssignals an die Steuersignal-Modifikationsstufe.

4. Elektrischer Antrieb nach Anspruch 3, dadurch gekennzeichnet,
daß die aktuelle Bewegungsrichtung durch die Bewegungsrichtungs-Detektionsstufe (43) aus einem Vergleich der Phasenlage wenigstens zweier der Sensorsignale bestimmbar ist.

5. Elektrischer Antrieb nach einem der vorhergehenden Ansprüche, gekennzeichnet durch
eine Geschwindigkeits-Meßstufe (38) zum Bestimmen der Bewegungsgeschwindigkeit des Läufers.

6. Elektrischer Antrieb nach Anspruch 5, dadurch gekennzeichnet,
daß der Geschwindigkeits-Meßstufe die Sensorsignale zuführbar sind, daß in der Geschwindigkeits-Meßstufe die zeitliche Abfolge vorgebbarer Abschnitte der Sensorsignale mit einem Zeitnormal vergleichbar ist und aus diesem Vergleich ein die Bewegungsgeschwindigkeit darstellendes Geschwindigkeitssignal zur Abgabe an die Verzögerungszeit-Bestimmungsstufe ableitbar ist.

7. Elektrischer Antrieb nach einem der vorhergehenden Ansprüche, dadurch gekennzeichnet,
daß zur Bildung der Sensorsignale in der Positionsgeberanordnung wenigstens Teilabschnitte von durch die Bewegung des Läufers im Ständer induzierten Spannungen herangezogen werden und daß die von der Phasenstellstufe zum Sensorsignal jedes Strangs hinzugefügte Phasenverschiebung die Phasenlage der zugehörigen Strangspannung bestimmt.

8. Elektrischer Antrieb nach einem der vorhergehenden Ansprüche, dadurch gekennzeichnet,
daß von der Positionsgeberanordnung als Sensorsignale rechteckförmige Signale erzeugt werden, deren Flanken ein Maß für die Position des Läufers bezüglich des zugehörigen Strangs bilden.

9. Elektrischer Antrieb nach Anspruch 8, dadurch gekennzeichnet,
daß die rechteckförmigen Sensorsignale einen Tastgrad von wenigstens 50 % aufweisen und ihre Phasenlagen zyklisch im wesentlichen gleich beabstandet über einen Bewegungszyklus des Läufers verteilt angeordnet sind.

## Claims

1. An electrical drive arrangement comprising
- an artificially excited electric motor (1) comprising a stator, having windings (3, 4, 5) arranged as a plurality of phase windings, and a rotor,
- an electronic commutation circuit (6) for energizing the phase windings of the electric motor with electric power,
- a position sensor device (23) for supplying a sensor signal for each phase winding of the electric motor in dependence upon an instantaneous position of the rotor relative to the stator, each of the sensor signals being in an impressible phase relationship with respect to the position of the rotor,
- a phase control stage (25) for subjecting the phase relationship of the sensor signals to a phase shift which depends at least on the speed of movement of the rotor and which is uniform for all the sensor signals, as a result of which resultant sensor signals are obtained,
- a waveform generator (28), to which the resultant sensor signals can be applied and in which commutation signals for the associated phase winding are derived from each of the resultant sensor signals, in order to control in the commutation circuit the variation in time and the amplitude of the electric power to be applied to the electric motor, and
- a control stage (36) for controlling the amplitude and the phase shift of the electric power supply to the electric motor in dependence upon at least the speed of movement of the rotor,
characterized in that the phase control stage comprises:
- a control signal generation stage (48) which, for the value of the phase shift currently impressed by the control stage, selects for each individual sensor signal from the multitude of all the sensor signals that one as a substitute sensor signal, which directly or in inverted form by means of a minimal delay can be given the phase relationship of the resultant sensor signal to be derived from said individual sensor signal, and which stage is capable of supplying control signals containing information about this selection,
- a sensor signal allocation stage (47), to which the sensor signals from the position sensor device can be applied and in which under control of the control signals the substitute sensor signals are derived from the sensor signals and are made available,
- a delay time determining stage (52) for determining, from the currently impressed value for the phase relationship, the speed of movement of the rotor as well as the spacing between the phases of the sensor signals along a movement coordinate describing the position of the rotor, a time interval (delay time) corresponding to the delay between each of the substitute sensor signals and the resultant sensor signal to be derived therefrom,
- a sensor signal output stage(55), to which the substitute sensor signals can be applied and which, in response to a load signal, can be loaded with and can supply the resultant sensor signals, and
- a load signal generating stage (53), in which upon each change of the value of one of the sensor signals or the substitute sensor signals the load signal can be generated anew and can be applied to the sensor signal output stage, delayed relative to this change by the delay time determined in the delay time determining stage.

2. An electrical drive arrangement as claimed in Claim 1, characterized by
a control signal modification stage (46) to which the control signals from the control signal generation stage as well as a direction-of-movement signal can be applied and by which the control signals, under control of the direction-of-movement signal, can be converted into direction-of-movement-corrected control signals, enabling the substitute sensor signals to be derived correctly from the sensor signals for the prevailing direction of movement of the rotor.

3. An electrical drive arrangement as claimed in Claim 2, characterized by
a direction-of-movement detection stage (43) for detecting the current direction of movement of the rotor and for supplying the accordingly formed direction-of-movement signal to the control signal modification stage.

4. An electrical drive arrangement as claimed in Claim 3, characterized in that
the current direction of movement can be determined by the direction-of-movement detection stage (43) by means of a comparison of the phase relationship of at least two of the sensor signals.

5. An electrical drive arrangement as claimed in any one of the preceding Claims, characterized by
a speed measuring stage (38) for determining the speed of movement of the rotor.

6. An electrical drive arrangement as claimed in Claim 5, characterized in that
the sensor signals can be applied to the speed measuring stage, the succession in time of given portions of the sensor signals is comparable with a time standard in the speed measuring stage, and a speed signal representative of the speed of movement is derivable from this comparison in order to be supplied to the delay time determining stage.

7. An electrical drive arrangement as claimed in any one of the preceding Claims, characterized in that
at least portions of the voltages induced in the stator by the movement of the rotor are used for the generation the sensor signals in the position sensor device, and the phase shift impressed on the sensor signal of each phase winding by the phase control stage determines the phase relationship of the associated phase voltage.

8. An electrical drive arrangement as claimed in any one of the preceding Claims, characterized in that
the position sensor device generates rectangular sensor signals, whose edges form a measure of the position of the rotor relative to the associated phase winding.

9. An electrical drive arrangement as claimed in Claim 8, characterized in that
the rectangular sensor signals have a duty cycle of at least 50 % and their phases are cyclically substantially equispaced over one cycle of movement of the rotor.

## Revendications

1. Entraînement électrique avec
- un moteur électrique (1) excité par une source extérieure qui présente un stator avec des enroulements (3,4,5) disposés en plusieurs tronçons et un rotor (2),
- un dispositif de commutation (6) électronique en vue de l'alimentation des tronçons de moteur électrique en énergie électrique,
- un détecteur de position (23) en vue de délivrer respectivement un signal de capteur pour chaque tronçon du moteur électrique en fonction d'une position instantanée du rotor par rapport au stator, chacun des signaux du capteur adoptant une position de phase à déterminer préalablement par rapport à la position du rotor,
- un étage de réglage de phase (25) en vue d'ajouter un déphasage uniforme pour tous les signaux de capteur dépendant au moins de la vitesse de mouvement du rotor par rapport à la position de phase des signaux du capteur, les signaux de capteur résultants étant obtenus,
- un générateur de courbe (28) auquel peuvent être amenés les signaux de capteur résultants et dans lequel des signaux de commutation sont dérivés à partir de chacun des signaux de capteur résultants pour le tronçon correspondant en vue de la commande, à effectuer dans le dispositif de commutation, du tracé temporel et de l'amplitude de l'énergie électrique à amener au moteur électrique et
- un étage de réglage (36) en vue du réglage de l'amplitude et du déphasage de l'alimentation en énergie électrique vers le moteur électrique en fonction, au moins, de la vitesse de mouvement du rotor,
caractérisé en ce que l'étage de réglage de phase comprend
- un étage de production de signaux de commande (48) dans lequel, pour la valeur du déphasage actuellement déterminée par l'étage de réglage pour chacun des signaux de capteur à partir de la quantité de tous les signaux de capteur est sélectionné en tant que signal de capteur de remplacement celui qui peut être transmis directement ou après inversion par un retard minimal dans la position de phase du signal de capteur résultant à dériver dudit signal de capteur individuel et dont peuvent être délivrés les signaux de commande qui contiennent une information sur cette sélection,
- un étage d'affectation de signaux de capteur (47) auquel peuvent être amenés les signaux de capteur du dispositif détecteur de position et dans lequel sont dérivés et fournis les signaux de capteur de remplacement en fonction des signaux de commande à partir des signaux de capteur,
- un étage de détermination du temps de retard (52) en vue de la détermination d'un intervalle de temps correspondant au retard entre chacun des signaux du capteur et de remplacement et du signal de capteur résultant à dériver respectivement de celui-ci (temps de retard) à partir de la valeur actuellement déterminée du déphasage de la vitesse de déplacement du rotor ainsi que de l'intervalle des positions de phase des signaux du capteur le long d'une coordonnée de mouvement décrivant la position du rotor,
- un étage de sortie de signaux de capteur (55) auquel peuvent être amenés des signaux de capteur de remplacement et dans lequel des signaux de capteur résultants, déclenchés par un signal de charge, peuvent être enregistrés et délivrés par celui-ci ainsi qu'un
- un étage de production de signaux de charge (53) dans lequel le signal de charge peut être produit à nouveau à chaque modification de la valeur d'un des signaux de capteur ou des signaux de capteur de remplacement et amené à l'étage de sortie de signaux de capteur après retardement du temps de retard déterminé dans l'étage de détermination du temps de retard par rapport à ce changement.

2. Entraînement électrique selon la revendication 1,
caractérisé par
un étage de modification de signaux de commande (46) auquel peuvent être amenés les signaux de commande de l'étage de production de signaux de commande ainsi qu'un signal de sens de mouvement et duquel les signaux de commande commandés par le signal de sens de mouvement peuvent être transformés en signaux de commande corrigés quant au sens de mouvement par lesquels une dérivation des signaux de capteur de remplacement correcte pour le sens de mouvement respectivement présent du rotor peut être effectuée à partir des signaux de capteur.

3. Entraînement électrique selon la revendication 2, caractérisé par
un étage de détection de sens de mouvement (43) en vue de la détection du sens de mouvement actuel du rotor et en vue de la délivrance du signal de sens de mouvement conçu en conséquence à l'étage de modification des signaux de commande.

4. Entraînement électrique selon la revendication 3, caractérisé en ce
que le sens de mouvement actuel peut être déterminé par l'étage de détection de sens de mouvement (43) à partir d'une comparaison de la position de phase d'au moins deux des signaux de capteur.

5. Entraînement électrique selon l'une des revendications précédentes, caractérisé par
un étage de mesure de la vitesse (38) en vue de la détermination de la vitesse de mouvement du rotor.

6. Entraînement électrique selon la revendication 5, caractérisé en ce qu'à l'étage de mesure de la vitesse peuvent être amenés les signaux de capteur de telle sorte que la séquence temporelle de segments à déterminer préalablement des signaux de capteur est comparable dans l'étage de mesure de la vitesse à une normale temporelle et, à partir de cette comparaison, un signal de vitesse représentant la vitesse de mouvement peut être dérivé en vue de sa délivrance à l'étage de détermination du temps de retard.

7. Entraînement électrique selon l'une des revendications précédentes, caractérisé en ce
qu'au moins des segments partiels des tensions induites par le mouvement du rotor dans le stator peuvent être utilisés en vue de la formation des signaux de capteur dans le dispositif détecteur de position et que le déphasage inséré par l'étage de réglage de phase au signal de capteur de chaque tronçon détermine la position de phase de la tension de tronçon correspondante.

8. Entraînement électrique selon l'une des revendications précédentes, caractérisé en ce
que des signaux rectangulaires sont produits comme des signaux de capteur par le dispositif détecteur de position, leurs flancs formant une mesure de la position du rotor par rapport au tronçon correspondant.

9. Entraînement électrique selon la revendication 8, caractérisé en ce
que les signaux de capteur rectangulaires présentent un degré de modulation d'au moins 50% et que leurs positions de phase sont disposées de manière répartie cycliquement à un intervalle essentiellement égal sur un cycle de mouvement du rotor.
